# EUROPEAN PATENT APPLICATION

(11) **EP 4 325 942 A1**
(43) Date of publication of application: **21.02.2024**
(21) Application number: 22803745.3
(22) Date of filing: 22.04.2022
(51) Int. Cl.: H04W 48/16

(54) **METHOD AND APPARATUS FOR DETERMINING NETWORK SELECTION POLICY**

(30) Priority: 18.05.2021 CN 202110541595; 12.07.2021 CN 202110784898
(71) Applicant: Huawei Technologies Co., Ltd., Shenzhen, Guangdong 518129 (CN)
(72) Inventor: DOU, Fenghui, Shenzhen, Guangdong 518129 (CN); JIN, Hui, Shenzhen, Guangdong 518129 (CN); CHONG, Weiwei, Shenzhen, Guangdong 518129 (CN)
(74) Representative: Epping - Hermann - Fischer
(86) International application number: PCT/CN2022/088570
(87) International publication number: WO 2022/242421

(57) **Abstract**

Embodiments of this application provide a network selection policy determining method and apparatus, and relate to the field of communication technologies. The method includes: A first network device obtains first network selection preference information, and determines a network selection policy based on the first network selection preference information. The first network selection preference information is network selection preference information of a first terminal. The first network selection preference information includes a learning result obtained by learning data related to network selection of a terminal. The network selection policy is used to determine a radio management policy for the first terminal. A core network device may determine a network selection policy for the terminal based on network selection preference information of the terminal, and globally consider affecting factors. In this way, a network finally selected by the terminal can ensure user experience, and negative impact on the entire network is avoided.

## Description

This application claims priority to Chinese Patent Application No. 202110541595.1, filed with the China National Intellectual Property Administration on May 18, 2021 and entitled "NETWORK MANAGEMENT METHOD AND APPARATUS BASED ON UE MOVEMENT MANNER", and to Chinese Patent Application No. 202110784898.6, filed with the China National Intellectual Property Administration on July 12, 2021 and entitled "NETWORK SELECTION POLICY DETERMINING METHOD AND APPARATUS", both of which are incorporated herein by reference in their entireties.

### TECHNICAL FIELD

This application relates to the field of communication technologies, and in particular, to a network selection policy determining method and apparatus.

### BACKGROUND

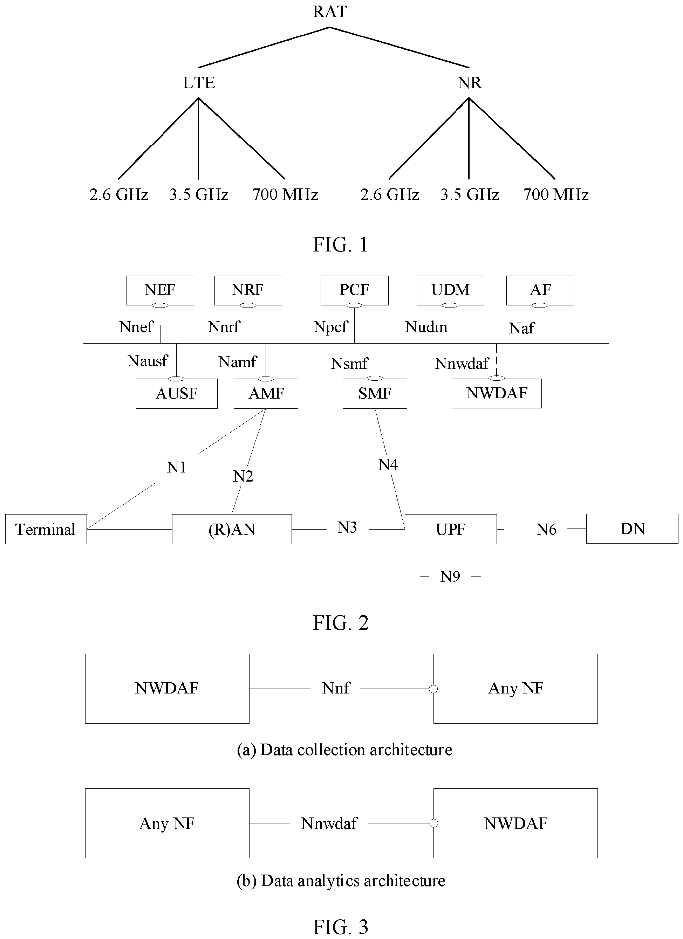

Currently, refer to FIG. 1. In a 5th generation (5th Generation, 5G) system, there is a network deployment scenario in which access networks of two radio access technologies (radio access technologies, RATs) (namely, network standards) coexist. The two radio access technologies are long term evolution (long term evolution, LTE) (or evolved LTE (evolved LTE, eLTE), and the following uses LTE as an example for description) and new radio (new radio, NR). Each network standard may have a plurality of access frequencies (frequencies) (briefly referred to as frequencies), for example, 2.6 gigahertz (GHz), 3.5 GHz, and 700 megahertz (MHz). A process in which a terminal determines a network standard and/or a frequency for access may be referred to as network selection.

Currently, in one case, a network may determine a network selection policy for the terminal based on a requirement (for example, a service requirement or a user requirement), an access network device may determine network selection information based on the network selection policy, and the terminal performs network selection based on the network selection information sent by the access network device. This improves quality of service and/or user experience. In another case, the terminal may learn network selection data of the terminal, or learn network selection data that is of a plurality of terminals and that is obtained from a server, to obtain a network selection policy, and perform network selection based on the network selection policy. For the former case, when the network formulates the network selection policy for the terminal, only information related to a service is considered, and a network selection requirement of the terminal is not fully considered. Consequently, a network selection policy finally formulated for the terminal cannot ensure user experience, and even damages a terminal brand image (for example, a network determined based on the network selection information causes poor user experience, and a user may consider that the poor user experience is caused by the terminal). For the latter case, the terminal usually learns based on network selection data of a single terminal or some terminals of a same brand, and cannot globally consider affecting factors of network selection. This may have negative effect on the entire network, for example, affecting a camping ratio of the network.

### SUMMARY

Embodiments of this application provide a network selection policy determining method and apparatus, which resolves a problem that a current network selection method cannot ensure user experience or has negative impact on a network.

According to a first aspect, a network selection policy determining method is provided. The method includes: A first network device obtains first network selection preference information, and determines a network selection policy based on the first network selection preference information. The first network selection preference information is network selection preference information of a first terminal. The first network selection preference information includes a learning result obtained by learning data related to network selection of a terminal. The network selection policy is used to determine a radio management policy for the first terminal. According to the method provided in the first aspect, a core network device may determine a network selection policy for the terminal based on network selection preference information of the terminal, and globally consider affecting factors. In this way, a network finally selected by the terminal can ensure user experience, and negative impact on the entire network is avoided.

In a possible implementation, the method further includes: The first network device sends, to a second network device, a first request used to obtain the network selection preference information of the first terminal. In this case, that a first network device obtains first network selection preference information includes: The first network device receives the first network selection preference information from the second network device. In this possible implementation, an implementation method for obtaining the network selection preference information of the terminal is provided.

In a possible implementation, the first request includes an analytics identifier, and the analytics identifier indicates to analyze a network selection preference. In this possible implementation, the analytics identifier may be carried in the first request, to indicate a type of data to be analyzed by the second network device.

In a possible implementation, the first request further includes at least one of the following information: an identifier of the first terminal, location area information corresponding to the analytics identifier, period information corresponding to the analytics identifier, an application identifier corresponding to the analytics identifier, slice information corresponding to the analytics identifier, and data network information corresponding to the analytics identifier. In this possible implementation, more specific information is carried in the first request, to indicate data to be analyzed by the second network device more specifically.

In a possible implementation, that a first network device obtains first network selection preference information includes: The first network device receives the first network selection preference information from the first terminal. In this possible implementation, another implementation method for obtaining the network selection preference information of the terminal is provided.

In a possible implementation, the data related to network selection of the terminal includes one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information. In this possible implementation, a plurality of types of data used to determine the network selection preference of the terminal are provided, so that reliability of the determined network selection preference is higher.

In a possible implementation, the network selection information autonomously determined by the first terminal includes at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

In a possible implementation, the reason why the first terminal selects the target network includes at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell includes at least one of the following reasons: an access success rate of a second target cell is less than or equal to a fourth threshold, and the first terminal cannot display, on the second target cell, an icon that identifies a first-standard network, where the second target cell is another cell, other than the first target cell, that can be accessed by the first terminal. In a possible implementation, the data related to network selection of the terminal includes one or more of the following information: operation behaviors that are of a plurality of terminals and that are related to a network standard, network selection information autonomously determined by the plurality of terminals, a network standard on which the plurality of terminals camp, a user package of the plurality of terminals, complaint information that is of the plurality of terminals and that is related to the network standard, time information corresponding to the foregoing information, location information corresponding to the foregoing information, and service information corresponding to the foregoing information, where the plurality of terminals are related to the first terminal. In this possible implementation, a network selection preference of a specific terminal may be determined by using data of the plurality of terminals, so that the reliability of the determined network selection preference is higher.

In a possible implementation, the first network selection preference information includes one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

In a possible implementation, the at least one network selection consideration factor of the first terminal includes: at least one network selection consideration factor in an autonomous network selection process of the first terminal. The weight corresponding to each of the at least one network selection consideration factor of the first terminal includes: a weight corresponding to each of the at least one network selection consideration factor in the autonomous network selection process of the first terminal.

In a possible implementation, the method further includes: The first network device sends the network selection policy to an access network device accessed by the first terminal.

In a possible implementation, that a first network device determines a network selection policy based on the first network selection preference information includes: The first network device determines the network selection policy based on the first network selection preference information and a service analytics result of the first terminal. In this possible implementation, the first network device may determine the network selection policy based on the network selection preference information and the service analytics result, so that factors are considered in the determined network selection policy.

In a possible implementation, the method further includes: The first network device sends indication information to the first terminal, where the indication information indicates the first terminal to perform network selection based on network selection information delivered by a network, or the indication information indicates that network selection information delivered by a network is determined based on the network selection preference information of the first terminal. In this possible implementation, by using the indication information, even if the first terminal directly performs network selection based on the network selection information, the factors may be considered. This improves user experience.

In a possible implementation, the first network device is a policy control network element, and the second network device is a data analytics network element.

According to a second aspect, a network selection policy determining method is provided. The method includes: A first terminal sends data related to network selection of the first terminal to a third network device, where the data related to network selection of the first terminal is used to determine first network selection preference information, the first network selection preference information is network selection preference information of the first terminal, the first network selection preference information is used to determine a network selection policy, and the network selection policy is used to determine a radio management policy for the first terminal. According to the method provided in the second aspect, the third network device may obtain the data related to network selection of the first terminal, to provide the data for another network element in a subsequent process.

In a possible implementation, the data related to network selection of the first terminal includes one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information. In this possible implementation, a plurality of types of data used to determine the network selection preference of the terminal are provided, so that reliability of the determined network selection preference is higher.

In a possible implementation, the network selection information autonomously determined by the first terminal includes at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

In a possible implementation, the reason why the first terminal selects the target network includes at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell includes at least one of the following reasons: an access success rate of a second target cell is less than or equal to a fourth threshold, and the first terminal cannot display, on the second target cell, an icon that identifies a first-standard network, where the second target cell is another cell, other than the first target cell, that can be accessed by the first terminal.

In a possible implementation, the first network selection preference information includes one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

In a possible implementation, the at least one network selection consideration factor of the first terminal includes: at least one network selection consideration factor in an autonomous network selection process of the first terminal. The weight corresponding to each of the at least one network selection consideration factor of the first terminal includes: a weight corresponding to each of the at least one network selection consideration factor in the autonomous network selection process of the first terminal.

According to a third aspect, a network selection policy determining method is provided. The method includes: A first network device sends, to a second network device, a first request used to obtain network selection preference information of a first terminal. The second network device receives the first request from the first network device, and obtains data related to network selection of a terminal. The second network device learns the data related to network selection of the terminal to obtain first network selection preference information, where the first network selection preference information is the network selection preference information of the first terminal. The second network device sends the first network selection preference information to the first network device. The first network device receives the first network selection preference information from the second network device, and determines a network selection policy based on the first network selection preference information, where the network selection policy is used to determine a radio management policy for the first terminal.

The method provided in the third aspect further includes any one of the possible implementations provided in the first aspect and the second aspect.

In a possible implementation, the first network device is a policy control network element, and the second network device is a data analytics network element.

According to a fourth aspect, a network selection policy determining apparatus is provided. The apparatus includes: a functional unit configured to perform any method provided in the first aspect, where an action performed by the functional unit is implemented by hardware or implemented by hardware executing corresponding software.

According to a fifth aspect, a network selection policy determining apparatus is provided. The apparatus includes a functional unit configured to perform any method provided in the second aspect, where an action performed by the functional unit is implemented by hardware or implemented by hardware executing corresponding software.

According to a sixth aspect, a network selection policy determining apparatus is provided. The apparatus includes: a memory and a processor. Optionally, the apparatus further includes at least one communication interface and a communication bus. The memory is configured to store computer-executable instructions. The processor, the memory, and the at least one communication interface are connected through the communication bus. The processor executes the computer-executable instructions stored in the memory, to enable the apparatus to implement any method provided in the first aspect. The apparatus may exist in a product form of a chip.

According to a seventh aspect, a network selection policy determining apparatus is provided. The apparatus includes: a memory and a processor. Optionally, the apparatus further includes at least one communication interface and a communication bus. The memory is configured to store computer-executable instructions. The processor, the memory, and the at least one communication interface are connected through the communication bus. The processor executes the computer-executable instructions stored in the memory, to enable the apparatus to implement any method provided in the second aspect. The apparatus may exist in a product form of a chip.

According to an eighth aspect, a communication system is provided. The system includes the apparatus provided in the fourth aspect and the fifth aspect, or the apparatus provided in the sixth aspect and the seventh aspect.

According to a ninth aspect, a computer-readable storage medium is provided. The medium includes instructions. When the instructions are run on a computer, the computer is enabled to perform any method provided in the first aspect or the second aspect.

According to a tenth aspect, a computer program product is provided. The product includes instructions. When the instructions are run on a computer, the computer is enabled to perform any method provided in the first aspect or the second aspect.

According to an eleventh aspect, a chip is provided. The chip includes: a processor and an interface. The processor is coupled to a memory through the interface. When the processor executes a computer program or instructions in the memory, any method provided in the first aspect or the second aspect is performed.

In the foregoing aspects, for beneficial effects of the apparatuses corresponding to the methods, refer to the beneficial effects of the corresponding methods. Details are not described again. It should be noted that possible implementations in any one of the foregoing aspects may be combined on a premise that solutions are not contradictory.

### BRIEF DESCRIPTION OF DRAWINGS

FIG. 1 is a schematic diagram of a RAT and a frequency;
FIG. 2 is a schematic diagram of an architecture of a 5G system;
FIG. 3 is a schematic diagram of a service-based interface related to an NWDAF;
FIG. 4 is a schematic diagram of determining an RFSP index according to an embodiment of this application;
FIG. 5 is an interaction flowchart of a network selection policy determining method according to an embodiment of this application;
FIG. 6A and FIG. 6B are an interaction flowchart of another network selection policy determining method according to an embodiment of this application;
FIG. 7 is an interaction flowchart of still another network selection policy determining method according to an embodiment of this application;
FIG. 8 is a schematic diagram of composition of a network selection policy determining apparatus according to an embodiment of this application; and
FIG. 9 is a schematic diagram of a hardware structure of a network selection policy determining apparatus according to an embodiment of this application.

### DESCRIPTION OF EMBODIMENTS

In descriptions of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In the description of this application, unless otherwise specified, "at least one" means one or more, and "a plurality of" means two or more.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. The technical solutions in embodiments of this application may be applied to a 4th generation (4th Generation, 4G) system, systems evolved based on the 4G system (for example, a 4.5G system), a 5G system, and systems evolved based on the 5G system. The 4G system may also be referred to as an evolved packet system (evolved packet system, EPS). A core network of the 4G system may be referred to as an evolved packet core network (evolved packet core, EPC), and an access network may be referred to as LTE. An access network of a 4.5G system may be referred to as eLTE. A core network of the 5G system may be referred to as a 5GC (5G core), and an access network may be referred to as NR.

FIG. 2 shows an example of a schematic diagram of a network architecture of a 5G system. In the schematic diagram, the 5G system may include one or more of the following network functions (network functions, NFs): an authentication server function (authentication server function, AUSF) network element, an access and mobility management function (core access and mobility management function, AMF) network element, a data network (data network, DN), a unified data management (unified data management, UDM) network element, a policy control function (policy control function, PCF) network element, a (radio) access network ((radio) access network, (R)AN) network element, a user plane function (user plane function, UPF) network element, a terminal (terminal), an application function (application function, AF) network element, a session management function (session management function, SMF) network element, a network exposure function (network exposure function, NEF) network element, and a network function repository function (network function repository function, NRF) network element. Optionally, the 5G system further includes a network data analytics function (network data analytics function, NWDAF) network element. In addition to the functional network elements shown in FIG. 2, the network architecture of the 5G network may further include another functional network element. In embodiments of this application, a network element may also be referred to as an entity, a device, or the like.

It should be noted that the (R)AN network element, the AMF network element, the SMF network element, the AUSF network element, the UDM network element, the UPF network element, the PCF network element, the NWDAF network element, and the like in FIG. 2 are merely names, and the names do not constitute a limitation on the network elements. In the 5G network and another future network, entities or devices corresponding to these network elements may have other names. This is not specifically limited in embodiments of this application. For example, the UDM network element may further be replaced with a home subscriber server (home subscriber server, HSS), a user subscription database (user subscription database, USD), a database network element, or the like. This is uniformly described herein, and details are not described below again. For ease of description, the (R)AN network element, the AMF network element, the SMF network element, the UDM network element, the UPF network element, the PCF network element, the NWDAF network element, and the like are respectively referred to as a RAN, an AMF, an SMF, an UDM, an UPF, a PCF, an NWDAF, and the like below.

The terminal, the RAN, the UPF, and the DN in FIG. 2 are usually referred to as user plane network elements, and a user plane is configured to carry service data. Other network elements in FIG. 2 are referred to as control plane network elements, and a control plane is configured to carry a signaling message. FIG. 2 shows an interaction relationship between network elements, and corresponding interfaces. For example, the terminal and the AMF may interact with each other through an interface N1, and an interaction message is referred to as an N1 message (Message). In the 5G system, some NFs interact with each other through a service-based interface. The service-based interface is named by adding N before a name of a corresponding NF. For example, a service-based interface provided by the AMF may be denoted as Namf. An NF (for example, an NF 1) may externally interact with other NFs (for example, an NF 2, an NF 3, and an NF 4) through the service-based interface. The NF 2, the NF 3, and the NF 4 interact with the NF 1 through the service-based interface provided by the NF 1. Some network elements (or devices) may communicate with each other through a next generation (next generation, NG) interface. For example, the UPF may communicate with the SMF through an N4 interface.

Functions of some network elements in FIG. 2 are as follows.

The PCF provides related policies, such as an access control policy, a session control policy, and a charging policy, for a network device or a service user.

The UDM has functions such as managing subscription data of a user and generating authentication information of the user, and is configured to provide at least one of the following functions for the terminal: user identification processing, access authorization, registration/mobility management, subscription management, SMS message management, and the like.

The AF may be an application server or a service server, provides a specific type of service for the user, and may belong to an operator or a third party. The AF mainly supports interaction with a 3rd generation partnership project (3rd generation partnership project, 3GPP) core network to provide a service, for example, to affect a data routing decision, provide a policy control function, or provide some third-party services to a network side.

The RAN is a network including a plurality of access network devices (which may also be referred to as RAN nodes or network devices), and implements functions such as a radio physical layer function, resource scheduling and radio resource management, radio access control and mobility management functions, quality of service management, and data compression and encryption. The access network device is connected to the UPF through a user plane interface N3, and is configured to transmit data of the terminal. The access network device establishes a control plane signaling connection to the AMF through a control plane interface N2, to implement functions such as radio access bearer control. The access network device may be an apparatus that is deployed in the RAN and that provides a wireless communication function for the terminal, and may be, for example, a transmission reception point (transmission reception point, TRP), a base station, control nodes in various forms (for example, a network controller and a radio controller (for example, a radio controller in a cloud radio access network (cloud radio access network, CRAN) scenario)), or the like. Specifically, the access network device may be a macro base station, a micro base station (which is also referred to as a small cell), a relay station, an access point (access point, AP), or the like in various forms, or may be an antenna panel of a base station. The control node may be connected to a plurality of base stations, and configure resources for a plurality of terminals covered by the plurality of base stations. In systems using different radio access technologies, devices having a base station function may have different names. For example, the device may be an evolved NodeB (evolved NodeB, eNB or eNodeB) in an LTE system, may be a micro base station eNB in a heterogeneous network (heterogeneous network, HetNet) scenario, may be a base band unit (base band unit, BBU) and a remote radio unit (remote radio unit, RRU) in a distributed base station scenario, may be a base band pool (BBU pool) and an RRU in a CRAN scenario, and may be a next generation base station node (next generation node base station, gNB) in a 5G system or an NR system. A specific name of the base station is not limited in this application. Alternatively, the access network device may be an access network device or the like in a future evolved public land mobile network (public land mobile network, PLMN).

The AMF is mainly responsible for a signaling processing part, for example, functions such as terminal registration management, terminal connection management, terminal reachability management, terminal access authorization and access authentication, a terminal security function, terminal mobility management, network slice (network slice) selection, SMF selection, and terminal attachment and detachment. The AMF serves as signaling connection anchors of N1 and N2, provides routing of an N1/N2 session management (session management, SM) message to the SMF, and maintains and manages status information of the terminal. When the AMF network element provides a service for a session in the terminal, the AMF network element provides a control plane storage resource for the session, to store a session identifier, an SMF identifier associated with the session identifier, and the like.

The SMF is mainly responsible for all control plane functions of terminal session management, including: selecting, controlling, and redirecting the UPF, allocating and managing an internet protocol (internet protocol, IP) address, managing a quality of service (quality of service, QoS) of the session, obtaining a policy and charging control (policy and charging control, PCC) policy from the PCF, establishing, modifying, and releasing a bearer, and the like. The SMF also serves as a termination of an SM part in a non-access stratum (non-access stratum, NAS) message.

The UPF serves as an anchor point of a protocol data unit (protocol data unit, PDU) session connection, and is responsible for data packet filtering, data transmission/forwarding (for example, forwarding of data exchanged between an access network device and a DN), rate control, charging information generation, user plane QoS processing, uplink transmission authentication, transmission level verification, downlink data packet buffering, downlink data notification triggering, and the like for the terminal. The UPF may also serve as a branching point of a multi-homed (multi-homed) PDU session. A transmission resource and a scheduling function that are in the UPF and that provide a service for the terminal are managed and controlled by the SMF.

The NWDAF network element has functions of data collection, data training, data analytics, and data reasoning, and may be configured to: collect related data from a network element, a third-party service server, the terminal, or a network management system, perform analytics training based on the related data, and provide a data analytics result for the network element, the third-party service server, the terminal, or the network management system. The data analytics result may assist a network in selecting a quality of service parameter of a service, assist the network in performing traffic routing, assist the network in selecting a background traffic transmission policy, or the like. Refer to (a) in FIG. 3. (a) in FIG. 3 shows a data collection architecture (Data Collection architecture from any 5GC NF). Any NF may provide a service-based interface (namely, an interface Nnf in (a) in FIG. 3) for the NWDAF. The NWDAF invokes the NF through the service-based interface, to send data to the NF. Refer to (b) in FIG. 3. (b) in FIG. 3 shows a data analytics architecture (Network Data Analytics Exposure architecture). The NWDAF may also provide a service-based interface (namely, an interface Nnwdaf in (b) in FIG. 3) for any NF. The NF invokes the NWDAF through the service-based interface, to send data to the NWDAF.

DN provides, for example, a provider service, internet (internet) access, or a third-party service.

The terminal may be a device that provides voice and/or data connectivity for a user. The terminal and the access network device communicate with each other by using a specific air interface technology (for example, an NR technology or an LTE technology). The terminals may also communicate with each other by using a specific air interface technology (for example, the NR technology or the LTE technology). The terminal may communicate with one or more core network devices, such as the AMF and the SMF, through the access network device. The terminal may be a mobile terminal, for example, a mobile phone (or referred to as a "cellular" phone), a smartphone, a satellite wireless device, a wireless modem card, and a computer with a mobile terminal. For example, the terminal may be a laptop, portable, pocket-sized, handheld, computer built-in, or vehicle-mounted mobile apparatus that exchanges voice and/or data with an access network device. For example, the terminal may be a device such as a personal communications service (personal communication service, PCS) phone, a cordless phone, a session initiation protocol (session initiation protocol, SIP) phone, a wireless local loop (wireless local loop, WLL) station, a personal digital assistant (personal digital assistant, PDA), virtual reality (virtual reality, VR) glasses, augmented reality (augmented reality, AR) glasses, or a machine-type communication terminal. In internet of vehicles communication, a communication device mounted on a vehicle is a terminal, and a road side unit (road side unit, RSU) may also serve as a terminal. A communication device mounted on an unmanned aerial vehicle may also be considered as a terminal. The terminal may also be referred to as user equipment (user equipment, UE), a subscriber unit (subscriber unit), a subscriber station (subscriber station), a mobile station (mobile station), a mobile console (mobile), a remote station (remote station), an access point (access point), an access terminal (access terminal), a user terminal (user terminal), a user agent (user agent), or the like.

Currently, a network may determine a network selection policy for the terminal based on a requirement (for example, a service requirement or a user requirement), the access network device may determine network selection information based on the network selection policy, and the terminal performs network selection based on the network selection information sent by the access network device. This improves quality of service and/or user experience. For example, a network standard and/or a frequency may be selected based on different service requirements, to improve the quality of service. For example, a voice (Voice) service is run on LTE more stably. In this case, LTE may be selected for the voice service. A high-definition video (high-definition video, HD video) service is more sensitive to a requirement of a data rate or the like. In this case, NR may be selected for the HD video service. For another example, the network standard and/or the frequency may be selected for users or services of different values. For example, because NR has high costs and good quality, NR may be selected for high-value users or services. For another example, in consideration of network load balancing and network energy saving, an allocation solution of the network standard and/or the frequency may dynamically (or adaptively) change based on time, a location, or the like. For example, when an NR load is low, NR may serve some low-value services. When the NR load is high, the low-value services may be transferred to LTE. For another example, when the network standard/frequency needs to be disabled due to low cell usage in a specific time period, an existing user is transferred to another network standard/frequency.

In this embodiment of this application, a process of selecting the network standard and/or the frequency is referred to as network selection. The network selection in this application may be any one of the following cases: selecting the network standard, selecting the frequency, and selecting the frequency after selecting the network standard. Currently, the terminal may perform network selection by using the following solution 1 or solution 2.

### Solution 1:

The PCF determines an index to a network standard/frequency selection priority (index to RAT/frequency selection priority, RFSP index) for the terminal. The RFSP index indicates a priority of one or more network standards/frequencies. The RFSP index is sent to the access network device through the AMF. The access network device determines a radio resource management (radio resource management, RRM) policy based on the RFSP index. The RRM policy specifically includes: sending a cell reselection priority (cell reselection priority) to the terminal when the terminal enters an idle state, so that based on the cell reselection priority and after entering the idle state, the terminal performs network selection and selects a cell to camp on; determining a target cell (that is, redirecting the terminal to a different frequency)/target network standard (that is, redirecting the terminal to a different network standard) for the terminal when the terminal is in a connected state; or the like.

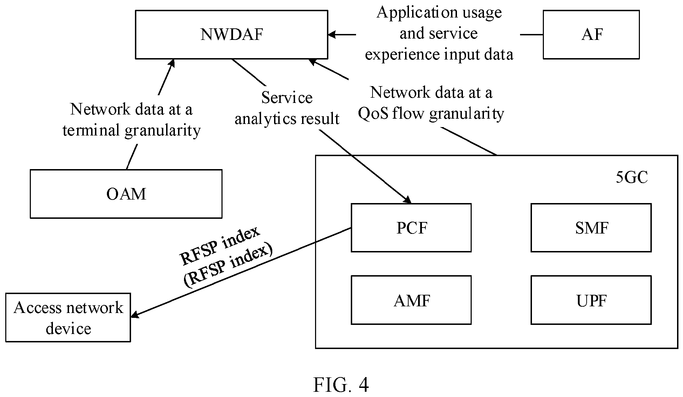

When the RFSP index is determined, because a network selection requirement is highly complex, a 3GPP standard proposes a network selection policy based on big data analytics, that is, a solution in which the NWDAF assists in determining the RFSP index, to perform network selection of the terminal more intelligently. Specifically, refer to FIG. 4. The PCF may subscribe to an analytics result of a terminal service behavior and service experience from the NWDAF. The NWDAF performs service usage analytics and service experience analytics based on application usage and service experience input data obtained from the AF, network data at a terminal granularity (UE level) obtained from operation, administration, and maintenance (operation, administration and maintenance, OAM), and network data at a QoS flow granularity (QoS flow level) obtained from a 5GC, to obtain a service analytics result, and sends the service analytics result to the PCF. The PCF determines the RFSP index for the terminal based on the service analytics result sent by the NWDAF.

The network data at the terminal granularity mainly includes reference signal received power (reference signal received power, RSRP), reference signal received quality (reference signal received quality, RSRQ), and a signal to interference plus noise ratio (signal to interference plus noise ratio, SINR) measurement value of the terminal. The network data at the QoS flow granularity mainly includes an identifier of a QoS flow (QoS flow), a QoS parameter of the QoS flow, a data network name (data network name, DNN) corresponding to a PDU session (PDU session) to which the QoS flow belongs, a slice, and the like. The application usage and service experience input data mainly includes an application identifier used by the terminal, a start time, an end time, a mean opinion score (mean opinion score, MOS) of the service, and the like.

### Solution 2:

To improve user experience and show competitiveness of the terminal, currently, mainstream terminal manufacturers perform autonomous optimization on network selection. The terminal does not perform network selection solely based on information delivered by the network (for example, a cell reselection priority and a measurement frequency). For example, the terminal performs local optimization or terminal-cloud joint optimization based on historical data, for example, performs autonomous network selection based on a user behavior, service experience, or the like. For another example, the terminal that is in an idle state may first screen cells in the cell reselection priority based on the user behavior, the service experience, or the like, remove a cell of which the service experience is considered to be poor by the terminal, and then perform cell reselection based on a screening result.

In the foregoing solution 1, when the network selection policy is formulated for the terminal, only information related to the service (specifically, service usage information and service experience information) is considered, and a network selection requirement of the terminal is not fully considered. Consequently, a network selection policy finally formulated for the terminal cannot ensure user experience, and even damages a terminal brand image (for example, a network determined based on the network selection information causes poor user experience, and a user may consider that poor user experience is caused by the terminal). In the foregoing solution 2, the terminal usually learns based on a single terminal or some terminals of a same brand, and cannot globally consider affecting factors of network selection. This may have negative effect on the entire network, for example, affecting a camping ratio of the network.

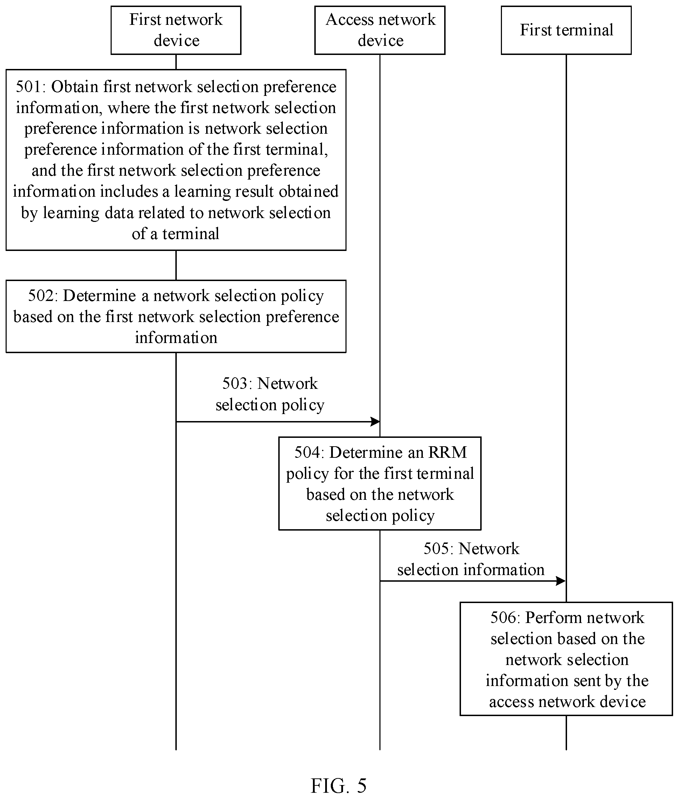

To ensure user experience and avoid negative impact on an entire network, this application provides a network selection policy determining method. In the method, a core network device may determine a network selection policy for a terminal based on network selection preference information of the terminal, and globally consider affecting factors. In this way, a network finally selected by the terminal can ensure user experience, and the negative impact on the entire network is avoided. Refer to FIG. 5. The method includes the following steps.

501: A first network device obtains first network selection preference information, where the first network selection preference information is network selection preference information of a first terminal, and the first network selection preference information includes a learning result obtained by learning data related to network selection of the terminal.

The first network device, a second network device, and a third network device in this application may also be respectively referred to as a first network element, a second network element, and a third network element. The first network device may be a policy control network element, for example, a PCF in a 5G system.

The first terminal in this application may be a single terminal, or may be a terminal in a terminal group (UE group) that includes a plurality of terminals. This is not limited.

A method for learning the data related to network selection of the terminal may be statistical analytics, machine learning, artificial intelligence, a neural network, or the like. It should be noted that the first network selection preference information is a prediction result that is generated based on historical data and that is for network selection. More historical data indicates that the prediction result is closer to an actual network selection preference of the terminal.

502: The first network device determines a network selection policy based on the first network selection preference information.

Optionally, the network selection policy is used to determine a radio management policy (namely, an RRM policy) of the first terminal.

Optionally, during specific implementation, step 502 includes: The first network device determines the network selection policy based on the first network selection preference information and a service analytics result of the first terminal. The service analytics result of the first terminal includes an analytics result of service usage analytics and/or service experience analytics.

The network selection policy may be an RFSP index. For example, the RFSP index may be an integer ranging from 1 to 256. Each value represents a network selection meaning. For example, Table 1 shows an RFSP index and a corresponding network selection meaning.

**Table 1**

| RFSP index | Network selection meaning |
|---|---|
| 0 | Camp on LTE as much as possible |
| 1 | Camp on NR as much as possible |
| 2 | Camp on a specific frequency of NR (for example, a specific high frequency) as much as possible |
| ... | ... |

It should be noted that the RFSP index may not indicate single information, but indicates priority information of a network standard/frequency. Different RFSP indexes indicate different priority sequences. For example, in a descending order, a priority that is of network standards and that is indicated by one RFSP index (for example, RFSP 3) is: NR-LTE-UTRAN. In a descending order, a priority that is of network standards and that is indicated by another RFSP index (for example, RFSP 4) is: UTRAN-LTE-NR. The UTRAN means an evolved universal terrestrial radio access network (Evolved Universal Terrestrial Radio Access Network).

Optionally, refer to FIG. 5. After step 502, the method further includes the following steps.

503: The first network device sends the network selection policy to an access network device accessed by the first terminal. Correspondingly, the access network device accessed by the first terminal receives the network selection policy from the first network device.

504: The access network device determines the RRM policy for the first terminal based on the network selection policy.

The RRM policy specifically includes a cell reselection priority that is generated by the access network device based on the RFSP index and that is used for the terminal to perform measurement and network selection in an idle state, measurement configuration information that is used for the terminal to perform measurement and report a measurement result in a connected state, and a target cell/target network standard determined for the terminal when the terminal is in the connected state (performing an operation such as handover or redirection on the terminal, to transfer the terminal to an appropriate frequency/network standard, for example, from NR to EUTRAN, or from 3.5 GHz to 2.6 GHz).

For example, if the access network device determines, based on the RFSP index sent by the PCF, that a current network standard/frequency is a network standard/frequency with a highest priority, the access network device determines to continue to retain the terminal in the current network standard/frequency. If the access network device determines, based on the RFSP index sent by the PCF, that a priority of another network standard/frequency is higher, the access network device triggers a handover procedure to hand over the terminal to the another network standard/frequency, or the access network device triggers a redirection procedure, and sends redirection information (including information about the another network standard/frequency as a target network standard/frequency) to the terminal. After receiving the redirection information, the terminal reselects to access the target network standard/frequency, to complete the redirection procedure.

505: The access network device sends the network selection information to the first terminal based on the RRM policy of the first terminal. Correspondingly, the first terminal receives the network selection information sent by the access network device.

506: The first terminal performs network selection based on the network selection information sent by the access network device.

If the first terminal is in the idle state, the network selection information may be the cell reselection priority. In this case, the first terminal may perform network selection based on the cell reselection priority.

If the first terminal is in the connected state, in one case, the network selection information may be the measurement configuration information, for example, information about frequencies that may be measured. In this case, the first terminal may perform measurement on these frequencies, and report measurement reports to the access network device. The access network device determines, based on these measurement reports, whether to hand over the terminal and a cell to which the terminal is handed over. In another case, the network selection information may be the redirection information, for example, an RRC release message. The RRC release message may include configuration information of the target cell. In this case, the first terminal may release a connection on a source cell based on the RRC release message, and establish a connection on the target cell, to redirect the first terminal to the target cell. The source cell is a cell before the first terminal is handed over, and the target cell is a cell after the first terminal is handed over.

Optionally, after step 502 and before step 506, the method further includes the following step.

(11) The first network device sends indication information to the first terminal, where the indication information indicates the first terminal to perform network selection based on network selection information delivered by a network, or the indication information indicates that network selection information delivered by a network is determined based on the network selection preference information of the first terminal. Correspondingly, the first terminal receives the indication information from the first network device.

In this case, during specific implementation, step 506 may include: The first terminal performs network selection only based on the network selection information under an indication of the indication information. That is, the first terminal performs network selection completely based on the network selection information. This is only an example of how does the first terminal perform network selection. During actual implementation, the first terminal may also perform network selection based on the network selection information and based on a requirement of the first terminal in combination with other information. This is not limited in this application.

According to the method provided in this embodiment of this application, the core network device may determine the network selection policy for the terminal based on the network selection preference information of the terminal, and globally consider the affecting factors. In this way, the network finally selected by the terminal can ensure user experience, and the negative impact on the entire network is avoided.

In the foregoing embodiment, the data related to network selection of the terminal may be any one of the following cases 1 to 3.

Case 1: The data related to network selection of the terminal is data related to network selection of the first terminal. That is, when the network selection preference information of the first terminal is determined, the network selection preference information may be obtained by learning only based on the data related to network selection of the first terminal.

Case 2: The data related to network selection of the terminal is data related to network selection of a plurality of terminals, where the plurality of terminals are related to the first terminal, and the plurality of terminals do not include the first terminal.

Case 3: The data related to network selection of the terminal is data related to network selection of a plurality of terminals, where the plurality of terminals are related to the first terminal, and the plurality of terminals include the first terminal.

In Case 2 and Case 3, the network selection preference information obtained by learning the data that is of the plurality of terminals related to the first terminal and that is related to network selection may also be used to determine the network selection policy for the first terminal. That the plurality of terminals are related to the first terminal means that the plurality of terminals and the first terminal are one type or one group of terminals. Data that is of the one type or one group of terminals and that is related to network selection may be learned together. For example, terminals in a same location area may be one type or one group of terminals, or terminals of a same brand may be on type or one group of terminals, or terminals with a same user habit may be one type or one group of terminals. The one type or one group of terminals may form one terminal group, and the terminal group may be identified by using a terminal group identifier (UE group ID).

In the foregoing embodiment, in the first case, the network selection policy is the priority of the network standard, and in the second case, the network selection policy is the priority of the frequency. The following describes the data related to network selection of the terminal in the two cases.

First case: The network selection policy is the priority of the network standard.

In the first case, the data related to network selection of the first terminal includes one or more of the following information (11) to information (18).

(11) Operation behavior that is of the first terminal and that is related to the network standard.

The operation behavior that is of the first terminal and that is related to the network standard may include one or more of the following behaviors: a behavior of turning on/off a switch of a first-standard network, and network standards selected at different battery levels (or a network standard selected when the first terminal enters/exits a power saving mode). The behavior of turning on/off the switch of the first-standard network may be used to analyze whether a user prefers to select the first-standard network. For example, when the user does not turn off the switch of the first-standard network for a long time (for example, two hours, five hours, or two days) after turning on the switch of the first-standard network, it may be considered that the user prefers to select the first-standard network. The network standards selected at different battery levels (or the network standard selected when the first terminal enters/exits the power saving mode) may be used to analyze whether the user prefers to select the first-standard network at different battery levels (or when the first terminal enters/exits the power saving mode). For example, based on an example shown in Table 2, the user selects LTE only when the battery level is extremely low (10%). Therefore, it may be considered that the user prefers to select LTE only when the battery level is low (for example, less than or equal to 20%), and the user prefers to select NR when the battery level is not low (for example, greater than 20%).

**Table 2**

| Battery level | Selected network standard |
|---|---|
| 10% | LTE |
| 30% | NR |
| 50% | NR |
| 80% | NR |

In this embodiment of this application, the first-standard network and a second-standard network are networks of different standards. A higher-standard network in the first-standard network and the second-standard network may also be referred to as a high-standard network, and a lower-standard network may also be referred to as a low-standard network. For example, the first-standard network may be NR, and the second-standard network may be LTE; or the first-standard network may be LTE, and the second-standard network may be NR. If there are networks of more standards, these networks of more standards may also be respectively described as the first-standard network, the second-standard network, a third standard network, ....

(12) Network selection information autonomously determined by the first terminal.

The network selection information autonomously determined by the first terminal may include at least one of the following information: information about a target network (which may be referred to as a first target network) autonomously determined by the first terminal, and a network selection reason of the first terminal (the network selection reason is a reason why the first terminal selects the first target network). The first target network in this application is a network that the user determines to join after performing network selection. The information about the first target network autonomously determined by the first terminal may be used to analyze whether the user prefers to select the first-standard network in a case of autonomous network selection. The network selection reason of the first terminal may be used to analyze a case in which the user selects the first target network, to determine a case in which the user prefers to select the first-standard network.

The network selection reason of the first terminal includes at least one of the following reasons: an access success rate of a source network is less than or equal to a first threshold, power consumption of the first terminal during access to the source network is greater than or equal to a second threshold, and a quality of service value during access to the source network is less than or equal to a third threshold (a smaller quality of service value indicates poorer quality of service). Alternatively, the network selection reason of the first terminal includes at least one of the following reasons: an access success rate of a second target network is less than or equal to a fifth threshold. The second target network is a network, other than the first target network, that can be accessed by the first terminal. Optionally, the first target network may be a target network determined by the first terminal through autonomous network selection, and the second target network may be a target network that is of the first terminal and that is obtained through non-autonomous network selection.

The source network in this application is a network that the terminal joins before performing network selection. The first threshold, the second threshold, and the third threshold may all be preset (for example, configured by the network) or be determined by the terminal and the network through negotiation. This is not limited in this application.

The quality of service value may identify quality of service. For example, the quality of service value may be quality of experience (quality of experience, QoE) that represents service experience (service experience). Specifically, for a voice service, the quality of service value may be a MOS value; for a video service, the quality of service value may be a video MOS (video MOS) value; and for another service, the quality of service value may be a MOS value customized for the service. Each value of the QoE indicates a specific meaning, for example, excellent, good, medium, poor, smooth, and freezing. It should be noted that the quality of service value may be specific to a network slice, or may be specific to an application. This is not limited in this application.

It should be noted that at a same moment, the first terminal may select the target network under one network selection reason, or may select the target network under a plurality of network selection reasons. For example, the source network is LTE, and the first terminal may select NR only when the quality of service value is less than or equal to the third threshold during access to LTE, and the access success rate of LTE is less than or equal to the first threshold.

Table 3 shows an example of a correspondence between the target network and the network selection reason.

**Table 3**

| Target network | Network selection reason |
|---|---|
| LTE | Power consumption of the first terminal during access to the source network is greater than or equal to the second threshold |
| NR | Quality of service value during access to the source network is less than or equal to the third threshold, and/or the access success rate of the source network is less than or equal to the first threshold |

(13) Network standard on which the first terminal camps.

The network standard on which the first terminal camps is a network standard on which the first terminal camps when the data related to network selection of the first terminal is collected. The information may be used to analyze whether the first terminal prefers to select the first-standard network as a whole. For example, if the network standard on which the first terminal camps is collected 1000 times in which the first terminal camps on NR 800 times and camps on LTE 200 times, it may be considered that the first terminal prefers to select the first-standard network. (14) User package of the first terminal.

The user package of the first terminal is a subscribed service package of the user, and the service package may include information about whether the user subscribes to a service package of the first-standard network. On this basis, whether the user prefers to select the first-standard network may be determined. If the user subscribes to the service package of the first-standard network, it indicates that the user prefers to select the first-standard network without considering other factors. Otherwise, the user does not focus on whether to use the first-standard network.

(15) Complaint information that is of the first terminal and that is related to the network standard. The complaint information may be a complaint that is made by the user and that is about not camping on the first-standard network. For example, the complaint information may be information about whether the user makes a complaint after the first terminal is handed over from NR to LTE. The complaint information may be used to analyze whether the user prefers to select the first-standard network. If the user makes a large quantity of complaints about not camping on the first-standard network (for example, greater than one threshold, where the threshold may be preset), it may be considered that the user prefers to select the first-standard network. Otherwise, it is considered that the user does not focus on whether to use the first-standard network.

The information (15) may be used to represent a degree of sensitivity of the user to the first-standard network.

(16) Time information corresponding to the foregoing information.

The foregoing information herein may include one or more of the foregoing information (11), information (12), information (13), information (14), and information (15). It should be noted that, for each piece of information in the foregoing information, data of the information in different time may be analyzed by using the time information corresponding to the information, to determine whether the user prefers to select the first-standard network in different time.

For example, refer to Table 4. Table 4 shows a correspondence between the behavior of turning on/off the switch of the first-standard network in the foregoing information and the time information. It may be seen from Table 4 that the user turns on the switch of the first-standard network in the daytime and turns off the switch of the first-standard network in the early morning. Therefore, it may be considered that the user prefers to select the first-standard network in the daytime and in the evening (for example, from 8:00 a.m. to 12:00 p.m.), and prefers to select the second-standard network in the early morning (for example, from 0 a.m. to 8 a.m.).

**Table 4**

| Turn on or off the switch of the first-standard network | Turn-on time |
|---|---|
| | Turn-off time |
| First time | Turn-on time: 10:00 a.m. |
| | Turn-off time: 1:00 a.m. |
| Second time | Turn-on time: 9:00 a.m. |
| | Turn-off time: 1:00 a.m. |
| Third time | Turn-on time: 8:00 a.m. |
| | Turn-off time: 2:00 a.m. |

For another example, refer to Table 5. Table 5 shows a correspondence between the network standards selected at different battery levels in the foregoing information and the time information. It may be seen from Table 5 that, the user selects LTE only when the battery level is 10% in the early morning, and selects NR at remaining time regardless of the battery level. Therefore, it may be considered that the user prefers to select the second-standard network when the battery level is low (for example, less than or equal to 20%) in an early morning time period (for example, 0:00 a.m. to 6:00 a.m.), and prefers to select the first-standard network at the remaining time.

**Table 5**

| Battery level | Selected network standard | Corresponding time |
|---|---|---|
| 10% | LTE | 1:00 a.m. |
| 10% | NR | 9:00 a.m. |
| 10% | NR | 12:00 a.m. |
| 10% | NR | 6:00 p.m. |
| 30% | NR | 1:00 a.m. |
| | | 9:00 a.m. |
| | | 12:00 a.m. |
| 50% | NR | 2:00 a.m. |
| | | 9:00 a.m. |
| | | 12:00 a.m. |
| 80% | NR | 3:00 a.m. |
| | | 9:00 a.m. |
| | | 12:00 a.m. |

(17) Location information corresponding to the foregoing information.

The foregoing information herein may include one or more of the foregoing information (11), information (12), information (13), information (14), and information (15). It should be noted that, for each piece of information in the foregoing information, data of the information at different locations may be analyzed by using the location information corresponding to the information, to determine whether the user prefers to select the first-standard network at different locations.

The location information herein may be a cell identifier (cell ID), a tracking area identity (tracking area identity, TAI), coordinates, information about space of the user (for example, a bedroom or outdoors), or the like.

For example, refer to Table 6. Table 6 shows a correspondence between the network standards selected at different battery levels in the foregoing information and the location information. It may be seen from Table 6 that the user selects LTE only when the battery level is 10%, and the user is in a location outdoors (for example, on a playground) where the terminal cannot be charged.

In remaining cases, the user selects NR regardless of the location and the battery level. Therefore, it may be considered that the user prefers to select the second-standard network when the battery level is low (for example, less than or equal to 20%), and the user is in the location where the terminal cannot be charged, and prefers to select the first-standard network at remaining locations.

**Table 6**

| Battery level | Selected network standard | Corresponding Location |
|---|---|---|
| 10% | LTE | Outdoors (for example, playground) |
| 10% | NR | Indoors (for example, bedroom) |
| 10% | NR | Indoors (for example, study) |
| 10% | NR | Indoors (for example, cafe) |
| 30% | NR | Indoors (for example, bedroom) |
| | | Outdoors (for example, highway) |
| | | Outdoors (for example, playground) |
| 50% | NR | Outdoors (for example, highway) |
| | | Indoors (for example, study) |
| | | Indoors (for example, bedroom) |
| 80% | NR | Outdoors (for example, playground) |
| | | Outdoors (for example, highway) |
| | | Indoors (for example, study) |

(18) Service information corresponding to the foregoing information.

The foregoing information herein may include one or more of the foregoing information (11), information (12), information (13), information (14), and information (15). It should be noted that, for each piece of information in the foregoing information, data of the information in different services may be analyzed by using service information corresponding to the information, to determine whether the user prefers to select the first-standard network in different services.

The service information herein may be, for example, a service identifier.

For example, refer to Table 7. Table 7 shows a correspondence between the network standards selected at different battery levels in the foregoing information and the service information. It may be seen from Table 7 that the user selects LTE only when the battery level is 10%, and a service with a low traffic requirement (for example, a voice service or an SMS message service) is performed. In remaining cases, the user selects NR regardless of the service and the battery level.

Therefore, it may be considered that the user prefers to select the second-standard network when the battery level is low (for example, less than or equal to 20%), and the service with the low traffic requirement (for example, the voice service or the SMS message service) is performed, and prefers to select the first-standard network in remaining services.

**Table 7**

| Battery level | Selected network standard | Corresponding service |
|---|---|---|
| 10% | LTE | Voice service |
| 10% | LTE | SMS message service |
| 10% | NR | Video service |
| 30% | NR | Voice service |
| | | SMS message service |
| | | Video service |
| 50% | NR | Voice service |
| | | SMS message service |
| | | Video service |
| 80% | NR | Voice service |
| | | SMS message service |
| | | Video service |

In the first case, the data related to network selection of the plurality of terminals includes one or more of the following information (21) to information (28).

(21) Operation behaviors that are of the plurality of terminals and that are related to the network standard.

(22) Network selection information autonomously determined by the plurality of terminals.

(23) Network standard on which the plurality of terminals camp.

(24) User package of the plurality of terminals.

(25) Complaint information that is of the plurality of terminals and that is related to the network standard.

(26) Time information corresponding to the foregoing information.

(27) Location information corresponding to the foregoing information.

(28) Service information corresponding to the foregoing information.

For related descriptions of the data related to network selection of each terminal in the plurality of terminals, refer to related descriptions of the data related to network selection of the first terminal for understanding. Details are not described again.

In the first case, the first network selection preference information includes one or more of the following information (31) to information (37).

(31) Network standard preferred by the first terminal.

The information (31) may be a network standard that is determined by combining the foregoing data related to network selection of the terminal and that is preferred by the first terminal. For example, the user prefers the first-standard network, or the user does not focus on the high-standard network and the low-standard network.

(32) At least one network selection consideration factor of the first terminal.

The at least one network selection consideration factor may include one or more of the following information: a current battery level, power consumption in the network, the quality of service value in the network, an access success rate of the network, network efficiency, and the like.

Optionally, the network selection consideration factor includes at least one network selection consideration factor in an autonomous network selection process of the first terminal. The at least one network selection consideration factor in the autonomous network selection process of the first terminal may include one or more of the following information: the current battery level, the power consumption in the network, the quality of service value in the network, the access success rate of the network, and the like.

(33) Weight corresponding to each of the at least one network selection consideration factor of the first terminal.

A weight corresponding to one network selection consideration factor indicates an importance degree of the network selection consideration factor in a network selection process. A larger weight indicates greater importance. It should be noted that in different scenarios, weights of a same network selection consideration factor may be different.

Optionally, the weight corresponding to each network selection consideration factor includes the weight corresponding to each of the at least one network selection consideration factor in the autonomous network selection process of the first terminal.

(34) Probability of autonomous network selection.

The probability of autonomous network selection indicates a probability that autonomous network selection occurs. A higher probability that autonomous network selection occurs indicates higher reliability of a network selection policy that is determined based on the first network selection preference information. For example, the probability of the autonomous network selection may be calculated based on a quantity of times of autonomous network selection (or a quantity of days in which autonomous network selection occurs) and a total quantity of times of network selection (or a total quantity of days in which network selection occurs).

(35) Time information corresponding to the foregoing information.

The foregoing information herein may include one or more of the foregoing information (31), information (32), information (33), and information (34). It should be noted that by using the time information corresponding to the foregoing information, different network selection policies may be formulated for the first terminal at different time.

For example, based on the example shown in Table 4, a network selection policy of joining the first-standard network may be formulated for the first terminal in the daytime and in the evening, and a network selection policy of joining the second-standard network may be formulated for the first terminal in the early morning.

For another example, based on the example shown in Table 5, the network selection policy of joining the second-standard network may be formulated for the first terminal when the battery level is low (for example, less than or equal to 20%) in the early morning (for example, 0:00 a.m. to 6:00 a.m.), and the network selection policy of joining the first-standard network may be formulated for the first terminal in remaining time.

(36) Location information corresponding to the foregoing information.

The foregoing information herein may include one or more of the foregoing information (31), information (32), information (33), and information (34). It should be noted that by using the location information corresponding to the foregoing information, different network selection policies may be formulated for the first terminal when the first terminal is at different locations. For example, based on the example shown in Table 6, the network selection policy of joining the second-standard network may be formulated for the first terminal when the battery level is low (for example, less than or equal to 20%), and the user is at a location where the terminal cannot be charged, and the network selection policy of joining the first-standard network may be formulated for the first terminal at remaining locations.

(37) Service information corresponding to the foregoing information.

The foregoing information herein may include one or more of the foregoing information (31), information (32), information (33), and information (34). It should be noted that by using the service information corresponding to the foregoing information, different network selection policies may be formulated for the first terminal when the first terminal performs different services. For example, based on the example shown in Table 7, the network selection policy of joining the second-standard network may be formulated for the first terminal when the battery level is low (for example, less than or equal to 20%), and the service with low traffic requirement (for example, the voice service or the SMS message service) is performed, and the network selection policy of joining the first-standard network may be formulated for the first terminal in remaining services.

Based on the foregoing description for the first network selection preference information, for example, when the first terminal prefers to select the first-standard network, the RFSP index of the first-standard network should be configured as much as possible, to enable the terminal to camp on the first-standard network as much as possible. When the first terminal does not focus on the high-standard network and the low-standard network, the RFSP index may be configured based on factors such as the battery level, the power consumption, the quality of service value, and the network efficiency. For example, when a load of the first-standard network is heavy, the first terminal camps on the second-standard network as much as possible when the second-standard network can meet a service requirement, and camps on the first-standard network as much as possible when the second-standard network cannot meet the service requirement. When the load of the first-standard network is not heavy, the first terminal camps on the first-standard network as much as possible.

Second case: The network selection policy is the priority of the frequency.

In the second case, the data related to network selection of the first terminal includes one or more of the following information (41) to information (44).

(41) Network selection information autonomously determined by the first terminal.

The network selection information autonomously determined by the first terminal may include at least one of the following information: a priority that is of a frequency and that is autonomously determined by the first terminal, information about a first target cell autonomously determined by the first terminal, and a network selection reason of the first terminal (the network selection reason is the reason why the first terminal selects the first target cell).

The information about the cell may be information such as a cell ID, and frequency+PCI. PCI means a physical cell identifier (physical cell identifier).

The priority that is of the frequency and that is autonomously determined by the first terminal may be used to analyze frequencies on which cells are preferred to be selected by the first terminal. The first target cell in this application is a cell that the user determines to join after performing network selection. The information about the first target cell autonomously determined by the first terminal may be used to analyze the frequencies on which the cells are preferred to be selected by the user in a case of autonomous network selection. The network selection reason of the first terminal may be used to analyze a case in which the user selects the first target cell, to determine a case in which the user prefers to select cells on these frequencies.

The network selection reason of the first terminal includes at least one of the following reasons: an access success rate of a second target cell is less than or equal to a fourth threshold, and the first terminal cannot display, on the second target cell, an icon that identifies the first-standard network (in this case, the second target cell is a cell of the second-standard network, or the second target cell is a cell of the second-standard network and cannot perform dual connectivity with an NR cell (E-UTRAN New Radio-Dual Connectivity, EN-DC)). The second target cell is a cell, other than the first target cell, that can be accessed by the first terminal. Optionally, the first target cell may be a target cell determined by the first terminal through autonomous network selection, and the second target cell may be a target that is of the first terminal and that is obtained through non-autonomous network selection.

For example, if the first terminal originally camps on an LTE cell 1, an LTE-NR dual connectivity may be established on the LTE cell 1. The first terminal needs to be handed over. If the first terminal is handed over to an LTE cell 2, the LTE-NR dual connectivity cannot be implemented on the LTE cell 2, and a 5G icon cannot be displayed; and if the first terminal is handed over to an LTE cell 3, the LTE-NR dual connectivity may be implemented on the LTE cell 3, and the 5G icon may be displayed, so that the first terminal may select to camp on the LTE cell 3, to establish the LTE-NR dual connectivity when there is a requirement. The second target cell is the LTE cell 2, and the first target cell is the LTE cell 3.

(42) Time information corresponding to the foregoing information.

The foregoing information herein may include the foregoing information (41). It should be noted that by using the time information corresponding to the information (41), data of the information (41) in different time may be analyzed, to determine which frequencies are preferred by the user in different time.

(43) Location information corresponding to the foregoing information.

The foregoing information herein may include the foregoing information (41). It should be noted that by using the location information corresponding to the information (41), data of the information (41) at different locations may be analyzed, to determine which frequencies are preferred by the user at different locations.

(44) Service information corresponding to the foregoing information.

The foregoing information herein may include the foregoing information (41). It should be noted that by using the service information corresponding to the information (41), data of the information (41) in different services may be analyzed, to determine which frequencies are preferred by the user in different services.

In the second case, the data related to network selection of the plurality of terminals includes one or more of the following information (51) to information (54).

(51) Network selection information autonomously determined by the plurality of terminals.

(52) Time information corresponding to the foregoing information.

(53) Location information corresponding to the foregoing information.

(54) Service information corresponding to the foregoing information.

For related descriptions of the data related to network selection of each terminal in the plurality of terminals, refer to related descriptions of the data related to network selection of the first terminal for understanding. Details are not described again.

In the second case, the first network selection preference information includes one or more of the following information (61) to information (68).

(61) Frequency preferred by the first terminal.

The information (61) may be a frequency that is determined by combining the foregoing data related to network selection of the terminal and that is preferred by the first terminal.

(62) At least one network selection consideration factor of the first terminal.

The at least one network selection consideration factor may include one or more of the following information: the access success rate of the second target cell, and whether the first terminal may display, on the second target cell, the icon that identifies the first-standard network.

Optionally, the at least one network selection consideration factor includes at least one network selection consideration factor in an autonomous network selection process of the first terminal. The at least one network selection consideration factor in the autonomous network selection process of the first terminal includes one or more of the following information: the access success rate of the second target cell, and whether the first terminal may display, on the second target cell, the icon that identifies the first-standard network.

(63) Weight corresponding to each of the at least one network selection consideration factor of the first terminal.

A weight corresponding to one network selection consideration factor indicates an importance degree of the network selection consideration factor in a network selection process. A larger weight indicates greater importance. It should be noted that in different scenarios, weights of a same network selection consideration factor may be different.

Optionally, the weight corresponding to each network selection consideration factor includes the weight corresponding to each of the at least one network selection consideration factor in the autonomous network selection process of the first terminal.

(64) Probability of autonomous network selection.

The probability of autonomous network selection indicates a probability that autonomous network selection occurs. A higher probability that autonomous network selection occurs indicates higher reliability of a network selection policy that is determined based on the first network selection preference information. For example, the probability of the autonomous network selection may be calculated based on a quantity of times of autonomous network selection (or a quantity of days in which autonomous network selection occurs) and a total quantity of times of network selection (or a total quantity of days in which autonomous network selection occurs).

(65) First target cell and second target cell.

The first target cell and the second target cell indicate that the first terminal prefers to select the first target cell in a case in which a target cell obtained through non-autonomous network selection is the second target cell.

(66) Time information corresponding to the foregoing information.

The foregoing information herein may include one or more of the foregoing information (61) to information (65). It should be noted that by using the time information corresponding to the foregoing information, different network selection policies may be formulated for the first terminal at different time.

(67) Location information corresponding to the foregoing information.

The foregoing information herein may include one or more of the foregoing information (61) to information (65). It should be noted that by using the location information corresponding to the foregoing information, different network selection policies may be formulated for the first terminal when the first terminal is at different locations.

(68) Service information corresponding to the foregoing information.

The foregoing information herein may include one or more of the foregoing information (61) to information (65). It should be noted that by using the service information corresponding to the foregoing information, different network selection policies may be formulated for the first terminal when the first terminal performs different services.

Based on the foregoing description of the first network selection preference information, for example, when the first terminal prefers to select some frequencies, RFSP indexes corresponding to these frequencies should be configured as much as possible, to enable the terminal to camp on these frequencies as much as possible. When the first terminal does not focus on the frequency, whether the first terminal camps on a cell may be determined based on an access success rate of a cell, whether the icon that identifies the first-standard network can be displayed on the cell, and the like.

It should be noted that in the first case, the data related to network selection of the terminal may be used to determine the priority of the network standard, to select the network standard for the terminal. In the second case, the data related to network selection of the terminal may be used to determine the priority of the frequency, to select the frequency for the terminal. The data related to network selection of the terminal in the first case and the data related to network selection of the terminal in the second case may be combined to determine the priorities of the network standard and the frequency, to select the network standard and the frequency for the terminal.

In the foregoing embodiment, for a source and a specific meaning of the data related to network selection of the terminal (including the data in the first case and the data in the second case), refer to Table 8. It should be noted that the source of data in each table in this application is an initial source of the data. This does not mean that the data needs to be directly obtained from the source. For example, the data "an operation behavior that is of the terminal and that is related to the network standard" in Table 8 may be directly obtained from the terminal, or may be obtained from another network element, for example, the AF. The data in the AF may be reported by the terminal.

**Table 8**

| Data related to network selection of the terminal | Source (Source) | Data meaning |
|---|---|---|
| Time information | Terminal/OAM | Time information corresponding to information collection |
| Location information | Terminal/OAM | Location information corresponding to information collection |
| Network standard on which the terminal camps | Terminal/OAM | For example, LTE or NR |
| Operation behavior that is of the terminal and that is related to the network standard | Terminal | Behavior of turning on/off the switch of the first-standard network, and network standards selected at different battery levels (or network standard selected when the terminal enters/exits the power saving mode) |
| Network selection information autonomously determined by the terminal | Terminal | Information about the target network autonomously determined by the first terminal, network selection reason of the first terminal (the network selection reason is the reason why the first terminal selects the target network), priority that is of the frequency and that is autonomously determined by the first terminal, information about the first target cell autonomously determined by the first terminal, and network selection reason of the first terminal (the network selection reason is the reason why the first terminal selects the first target cell) |
| User package of the terminal | OAM | Subscribed service package of the user (whether the service package is a highest-standard package) |
| Complaint information that is of the first terminal and that is related to the network standard | OAM | User complaint information about not camping on a highest standard |
| Service information | Terminal/AF/NEF | Service information corresponding to information collection |

In the foregoing data related to network selection of the terminal, information that can be determined by the terminal (namely, data from the terminal) may be considered as the data related to autonomous network selection of the terminal. For example, for the data related to autonomous network selection of the terminal, refer to Table 9. The data that is mentioned in the foregoing embodiment and that is related to network selection of the terminal may be referred to as a network selection preference (network Selection Preference, NWSP), and the data related to autonomous network selection of the terminal may be referred to as autonomous network selection (autonomous network Selection, AWSP).

**Table 9**

| Data related to autonomous network selection of the terminal | Source | Data meaning |
|---|---|---|
| Time information | Terminal | Time information corresponding to information collection |
| Location information | Terminal | Location information corresponding to information collection |
| Network standard on which the terminal camps | Terminal | For example, LTE or NR |
| Operation behavior that is of the terminal and that is related to the network standard | Terminal | Behavior of turning on/off the switch of the first-standard network, and network standards selected at different battery levels (or network standard selected when the terminal enters/exits the power saving mode) |
| Network selection information autonomously determined by the terminal | Terminal | Information about the target network autonomously determined by the first terminal, network selection reason of the first terminal (the network selection reason is the reason why the first terminal selects the target network), priority that is of the frequency and that is autonomously determined by the first terminal, information about the first target cell autonomously determined by the first terminal, and network selection reason of the first terminal (the network selection reason is the reason why the first terminal selects the first target cell) |
| Service information | Terminal | Service information corresponding to information collection |

When the first network selection preference information is determined, the first network selection preference information may be obtained by learning the data shown in Table 8, or may be obtained by learning the data shown in Table 9. For the first network selection preference information, refer to Table 10.

**Table 10**

| First network selection preference information | Data meaning |
|---|---|
| Network standard preferred by the first terminal and/or frequency preferred by the first terminal | For example, NR |
| At least one network selection consideration factor of the first terminal | Current battery level, power consumption in the network, quality of service value in the network, access success rate of the network, network efficiency, access success rate of the second target cell, and whether the first terminal may display, on the second target cell, the icon that identifies the first-standard network |
| Weight corresponding to each of the at least one network selection consideration factor of the first terminal | Indicate an importance degree of each network selection consideration factor |
| Time information | Indicate time to which current network selection preference information is applicable |
| Location information | Indicate a location to which the current network selection preference information is applicable |
| Service information | Indicate a service to which the current network selection preference information is applicable |
| Probability of autonomous network selection | Indicate a probability that autonomous network selection occurs |
| First target cell | Indicate the target cell obtained through autonomous network selection |
| Second target cell | Indicate the target cell obtained through non-autonomous network selection |

It should be noted that after the first network selection preference information is determined, because the first network selection preference information may be different at different time, at different locations, or in different services, a plurality of pieces of first network selection preference information may be determined. For example, refer to Table 11. Each piece of first network selection preference information may correspond to one index, and the first network selection preference information shown in Table 10 may be network selection preference information corresponding to a specific index.

**Table 11**

| Index (index) | First network selection preference information |
|---|---|
| 1 | First network selection preference information 1 |
| 2 | First network selection preference information 2 |
| 3 | First network selection preference information 3 |

During specific implementation, step 501 may be implemented in the following manner 1 or manner 2.

### Manner 1

The first network device receives the first network selection preference information from the second network device. The second network device may be a data analytics network element, for example, an NWDAF in a 5G system.

In Manner 1, for example, for the first network selection preference information received by the first network device, refer to Table 12. A difference between Table 12 and Table 10 lies only in that an identifier of a terminal/terminal group and an index corresponding to the first network selection preference information are added.

**Table 12**

| First network selection preference information | Data meaning |
|---|---|
| Index | 1 |
| Identifier of a terminal/terminal group | For example, SUPI/UE group ID |
| Network standard preferred by the first terminal and/or frequency preferred by the first terminal | For example, NR |
| At least one network selection consideration factor of the first terminal | Current battery level, power consumption in the network, quality of service value in the network, access success rate of the network, network efficiency, access success rate of the second target cell, and whether the first terminal may display, on the second target cell, the icon that identifies the first-standard network |
| Weight corresponding to each of the at least one network selection consideration factor of the first terminal | Indicate the importance degree of each network selection consideration factor |
| Time information | Indicate the time to which the current network selection preference information is applicable |
| Location information | Indicate the location to which the current network selection preference information is applicable |
| Service information | Indicate the service to which the current network selection preference information is applicable |
| Probability of autonomous network selection | Indicate a probability that autonomous network selection occurs |
| First target cell | Indicate the target cell obtained through autonomous network selection |
| Second target cell | Indicate the target cell obtained through non-autonomous network selection |

In manner 1, before receiving the first network selection preference information, the first network device may send a first request to the second network device, where the first request is used to obtain the network selection preference information of the first terminal. The second network device receives the first request from the first network device, obtains, based on the first request, the data related to network selection of the terminal, learns the data related to network selection of the terminal to obtain the first network selection preference information, and sends the first network selection preference information to the first network device.

In manner 1, optionally, the first request includes an analytics identifier (Analytics ID), and the analytics identifier indicates to analyze a network selection preference. For example, the first request may indicate, by using information including Analytics ID = UE NWSP, to perform network selection preference analytics.

In manner 1, it should be noted that the first request may further include another Analytics ID, and each Analytics ID identifies a type of supported analytics that the second network device can generate (An Analytics ID information element is used to identify the type of supported analytics that NWDAF can generate).

In manner 1, optionally, the first request further includes at least one of the following information: an identifier of the first terminal, location area information (Area of Interest) corresponding to the analytics identifier, period information corresponding to the analytics identifier (Analytics target period), an application identifier (Application ID) corresponding to the analytics identifier, slice information corresponding to the analytics identifier, and data network information corresponding to the analytics identifier.

In manner 1, for example, the identifier of the first terminal may be a subscription permanent identifier (subscription permanent identifier, SUPI). For example, the location area information may be the cell ID, the TAI, or the like. For example, the slice information may be single network slice selection assistance information (Single Network Slice Selection Assistance Information, S-NSSAI). For example, the data network information may be a DNN.

In manner 1, it should be noted that if the first network device needs the second network device to learn data related to network selection of the plurality of terminals in the terminal group, the identifier of the first terminal may be replaced with the UE group ID.

In manner 1, the location area information corresponding to the analytics identifier indicates to perform network selection preference analytics for a terminal in the location area, the period information corresponding to the analytics identifier indicates to perform network selection preference analytics for a terminal in the period, the application identifier corresponding to the analytics identifier indicates to perform network selection preference analytics for the application, the slice information corresponding to the analytics identifier indicates to perform network selection preference analytics for the slice, and the data network information corresponding to the analytics identifier indicates to perform network selection preference analytics for the data network. In manner 1, for example, the first network device may send a subscription request to the second network device by invoking a service-based interface provided by the NWDAF. For example, the subscription request may be an analytics subscription Nnwdaf_AnalyticsSubscription_Subscribe (Analytics ID, a target of analytics reporting, and analytics filtering information). In this application, Analytics ID = UE NWSP, the target of analytics reporting = the identifier of the first terminal, and the analytics filtering information = (the location area information, period information, application identifier, slice information, and data network information).

In manner 1, that the second network device obtains, based on the first request, data related to network selection of the terminal may include: The second network device obtains, from another device and based on the first request, the data related to network selection of the terminal. The another device may be a terminal and/or a third network device. For the third network device, the second network device may send a second request to the third network device, where the second request is used to obtain the data related to network selection of the terminal. The third network device receives the second request from the second network device, and sends, based on the second request, the data related to network selection of the terminal to the second network device.

In manner 1, the third network device may include an application network element (for example, the AF in the 5G system), the OAM, the NEF, and the like. The data that is in the third network device and that is related to network selection of the terminal may be reported by the terminal. Specifically, one or more terminals separately send data related to network selection of the one or more terminals to the third network device, and the third network device separately receives, from the one or more terminals, the data that is of the terminals and that is related to network selection. For example, the first terminal may send the data related to network selection of the first terminal to the third network device, and the third network device receives, from the first terminal, the data related to network selection of the first terminal, where the data related to network selection of the first terminal is used to determine the first network selection preference information. It should be noted that the terminal may actively report the data related to network selection of the terminal to the third network device, or may report the data related to network selection of the terminal to the third network device under an indication of another network element (for example, the access network device). This is not limited in this application.

In manner 1, for example, for the data that is obtained by the second network device and that is related to network selection of the terminal, refer to Table 13 or Table 14. A difference between Table 13 and Table 8 and a difference between Table 14 and Table 9 lie only in that the identifier of the terminal/terminal group is added, to enable the second network device to determine to which terminals the obtained data belongs.

**Table 13**

| Data related to network selection of the terminal | Source | Data meaning |
|---|---|---|
| Identifier of the terminal/terminal group | Terminal | For example, SUPI/UE group ID |
| Time information | Terminal/OAM | Time information corresponding to information collection |
| Location information | Terminal/OAM | Location information corresponding to information collection |
| Network standard on which the terminal camps | Terminal/OAM | For example, LTE or NR |
| Operation behavior that is of the terminal and that is related to the network standard | Terminal | Behavior of turning on/off the switch of the first-standard network, and network standards selected at different battery levels (or network standard selected when the terminal enters/exits the power saving mode) |
| Network selection information autonomously determined by the terminal | Terminal | Information about the target network autonomously determined by the first terminal, network selection reason of the first terminal (the network selection reason is the reason why the first terminal selects the target network), priority that is of the frequency and that is autonomously determined by the first terminal, information about the first target cell autonomously determined by the first terminal, and network selection reason of the first terminal (the network selection reason is the reason why the first terminal selects the first target cell) |
| User package of the terminal | OAM | Subscribed service package of the user (whether the service package is the highest-standard package) |
| Complaint information that is of the first terminal and that is related to the network standard | OAM | User complaint information about not camping on the highest standard |
| Service information | Terminal/AF/NEF | Service information corresponding to information collection |

**Table 14**

| Data related to autonomous network selection of the terminal | Source | Data meaning |
|---|---|---|
| Identifier of the terminal/terminal group | Terminal | For example, SUPI/UE group ID |
| Time information | Terminal | Time information corresponding to information collection |
| Location information | Terminal | Location information corresponding to information collection |
| Network standard on which the terminal camps | Terminal | For example, LTE or NR |
| Operation behavior that is of the terminal and that is related to the network standard | Terminal | Behavior of turning on/off the switch of the first-standard network, and network standards selected at different battery levels (or network standard selected when the terminal enters/exits the power saving mode) |
| Network selection information autonomously determined by the terminal | Terminal | Information about the target network autonomously determined by the first terminal, network selection reason of the first terminal (the network selection reason is the reason why the first terminal selects the target network), priority that is of the frequency and that is autonomously determined by the first terminal, information about the first target cell autonomously determined by the first terminal, and network selection reason of the first terminal (the network selection reason is the reason why the first terminal selects the first target cell) |
| Service information | Terminal | Service information corresponding to information collection |

In manner 1, the data related to network selection of the terminal may belong to the foregoing case 1, case 2, or case 3.

### Manner 2

The first terminal sends the first network selection preference information to the first network device, and the first network device receives the first network selection preference information from the first terminal. The first network selection preference information sent by the first terminal may be a learning result obtained by the first terminal by learning the data related to network selection of the first terminal. That is, in manner 2, the data related to network selection of the terminal belongs to the foregoing case 1.

In manner 2, the first terminal may send the first network selection preference information to the first network device through the access network device and the AMF. For example, the first terminal may send the first network selection preference information to the first network device in a registration procedure or a registration update procedure. If the first terminal needs to update the first network selection preference information, the first terminal may send updated first network selection preference information to the first network device in the registration update procedure.

In manner 2, for example, the first network selection preference information may be carried in a terminal policy container (UE Policy Container) in a registration request (registration request).

In Manner 2, the first terminal may report the first network selection preference information, or may report the first network selection preference information based on an indication of the access network device. For example, the access network device sends, to the first terminal, indication information that indicates to report the network selection preference information. After receiving the indication information, the first terminal sends the first network selection preference information to a first device through the access network device and the AMF.

In manner 2, for the data that is obtained by the second network device and that is related to network selection of the terminal, refer to Table 14.

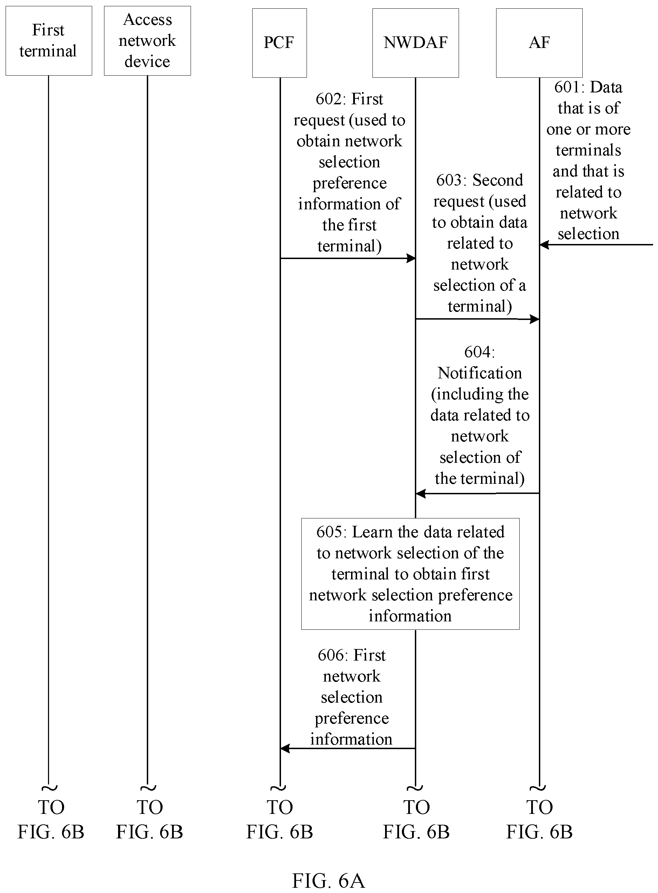

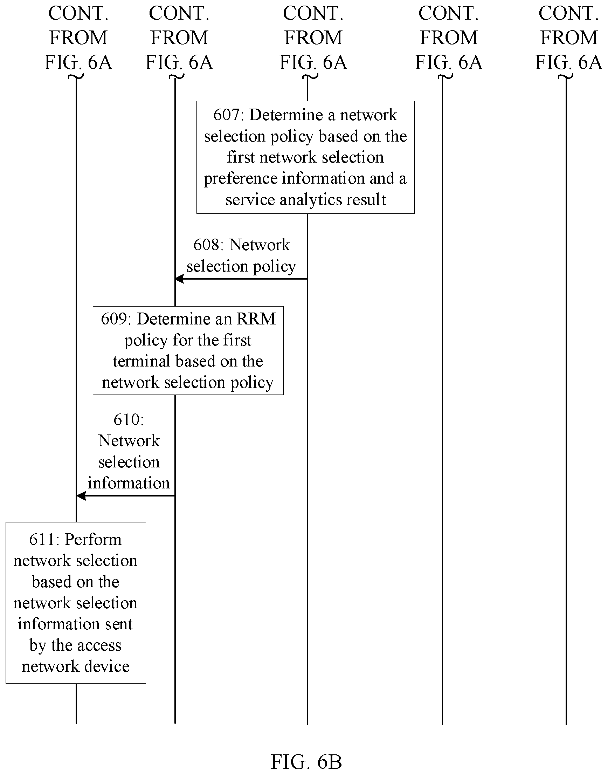

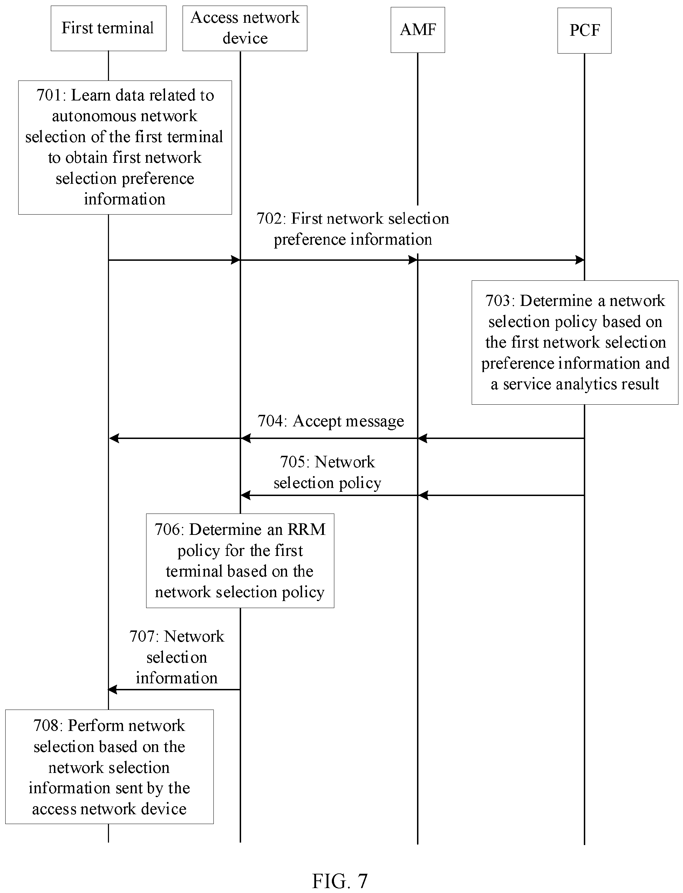

To make embodiments of this application clearer, the following uses an example in which a first network device is a PCF, a second network device is an NWDAF, and a third network device is an AF, to describe, by using FIG. 6A, FIG. 6B, and FIG. 7, the method provided in the foregoing embodiments as an example. FIG. 6A and FIG. 6B show an example of an implementation procedure of this application when the foregoing manner 1 is used. FIG. 7 shows an example of an implementation procedure of this application when the foregoing manner 2 is used. For parts in FIG. 6A, FIG. 6B, and FIG. 7 that are the same as those in the foregoing description, refer to the foregoing description. Details are not described again.

Refer to FIG. 6A and FIG. 6B. The method includes the following steps.

601: One or more terminals send data related to network selection of the one or more terminals to the AF. Correspondingly, the AF receives, from the one or more terminals, the data related to network selection of the one or more terminals.

The terminal may report the data related to network selection of the terminal to a network periodically or under a trigger condition. For example, the trigger condition may be: A user turns on/off a first-standard network, the terminal enters/exits a power saving mode, the terminal performs autonomous network selection, or the like.

It should be noted that for one terminal, the AF may obtain, from the terminal, data related to network selection of the terminal, or the AF may obtain, from another network element (for example, an OAM or an NRF), data related to network selection of the terminal, or the AF may not only obtain, from the terminal, the data related to network selection of the terminal, but also obtain, from the another network element, the data related to network selection of the terminal. This is not limited in this application.

602: The PCF sends a first request to the NWDAF, where the first request is used to obtain network selection preference information of a first terminal. Correspondingly, the NWDAF receives the first request from the PCF.

During specific implementation of step 602, the first request may be an invocation request sent by the PCF to the NWDAF through a service-based interface. For example, the PCF subscribes to an analytics event of Analytics ID = UE NWSP from the NWDAF. Specifically, the PCF sends an analytics subscription to the NWDAF by invoking Nnwdaf_AnalyticsSubscription_Subscribe (Analytics ID = UE NWSP, a target of analytics reporting = SUPI of the first terminal, and analytics filtering information = (location area information, period information, application identifier, slice information, and analytics data network information)).

If the PCF only wants to obtain autonomous network selection preference information of the first terminal, Analytics ID = UE NWSP may be replaced with Analytics ID = UE AWSP.

603: The NWDAF sends a second request to the AF, where the second request is used to obtain the data related to network selection of the terminal. Correspondingly, the AF receives the second request from the NWDAF.

During specific implementation of step 603, the second request may be an invocation request sent by the NWDAF to the AF through the service-based interface. For example, the NWDAF subscribes to, from the AF, a data notification used to analyze UE NWSP. Specifically, the NWDAF sends an event notification subscription Naf_EventExposure_Subscribe (Event ID = UE NWSP) to the AF, to indicate the AF to provide data of UE NWSP.

The AF may be a functional entity for terminal data collection (NW function for UE data collection).

If the PCF only wants to obtain the autonomous network selection preference information of the first terminal, Event ID = UE NWSP may be replaced with Event ID = UE AWSP.

604: The AF sends a notification to the NWDAF based on the second request, where the notification includes the data related to network selection of the terminal. Correspondingly, the NWDAF receives the notification sent by the AF.

For example, the notification may be an event notification Naf_EventExposure_Notify.

The data in the notification sent by the AF is input data for the NWDAF to analyze. For specific content of the input data, refer to the foregoing description. Details are not described again.

605: The NWDAF learns the data related to network selection of the terminal to obtain first network selection preference information, where the first network selection preference information is the network selection preference information of the first terminal.

During specific implementation of step 605, the NWDAF may perform analytics based on the received data related to network selection of the terminal by using a method such as statistical analytics or machine learning to obtain the first network selection preference information.

For related descriptions of the first network selection preference information, refer to the foregoing description. Details are not described herein again.

For example, the first network selection preference information may be carried in an analytics subscription notification Nnwdaf_AnalyticsSubscription_Notify.

606: The NWDAF sends the first network selection preference information to the PCF. Correspondingly, the PCF receives the first network selection preference information from the NWDAF.

607: The PCF determines a network selection policy based on the first network selection preference information and a service analytics result.

608: The PCF sends, through the AMF, the network selection policy to an access network device accessed by the first terminal. Correspondingly, the access network device receives the network selection policy from the PCF.

609: The access network device determines an RRM policy for the first terminal based on the network selection policy.

610: The access network device sends network selection information to the first terminal based on the RRM policy of the first terminal. Correspondingly, the first terminal receives the network selection information sent by the access network device.

611: The first terminal performs network selection based on the network selection information sent by the access network device.

Refer to FIG. 7. The method includes the following steps.

701: The first terminal learns data related to autonomous network selection of the first terminal to obtain first network selection preference information.

702: The first terminal sends the first network selection preference information to the PCF through the access network device and the AMF. Correspondingly, the PCF receives the first network selection preference information from the first terminal through the access network device and the AMF.

During specific implementation of step 702, the first terminal may send the first network selection preference information to the PCF in a registration procedure or a registration update procedure.

For example, the first network selection preference information may be carried in a terminal policy container (UE Policy Container) in a registration request (registration request) to be sent to the AMF, and the AMF may send information to the PCF by using a terminal policy container (UE Policy Container) in an access and mobility management policy request (AM Policy request).

703: The PCF determines a network selection policy based on the first network selection preference information and a service analytics result.

For related descriptions of the network selection policy, refer to the foregoing description. Details are not described again.

704: The PCF sends an accept message to the first terminal through the AMF and the access network device.

The accept message indicates that the PCF accepts the first network selection preference information, and also implicitly indicates that the first terminal performs network selection based on network selection information delivered by the network, or indicates that network selection information delivered by the network is determined based on the network selection preference information of the first terminal.

For example, the accept message may be carried in a terminal policy container (UE Policy Container) in an access and mobility management policy response (AM Policy response) to be sent to the AMF, and the AMF may send a message to the first terminal by using a terminal policy container (UE Policy Container) in a registration response (registration response).

There is no execution sequence between step 703 and step 704.

705: The PCF sends, through the AMF, the network selection policy to the access network device accessed by the first terminal. Correspondingly, the access network device receives the network selection policy from the PCF through the AMF.

706: The access network device determines an RRM policy for the first terminal based on the network selection policy.

707: The access network device sends the network selection information to the first terminal based on the RRM policy of the first terminal. Correspondingly, the first terminal receives network selection information sent by the access network device.

708: The first terminal performs network selection based on the network selection information sent by the access network device.

In this embodiment shown in FIG. 7, if the data (for example, battery level information, time information, and location information) related to autonomous network selection of the first terminal changes, the first terminal may update the first network selection preference information based on changed data related to autonomous network selection of the first terminal, and send updated first network selection preference information to the PCF by using a registration update procedure. The PCF may update the network selection policy based on the updated first network selection preference information.

According to the method provided in the foregoing embodiment, the terminal and the network may cooperatively determine the network selection policy. The network selection policy considers a network selection requirement of the terminal and actual experience, so that user experience may be improved. The method resolves a current problem that an RFSP index determined by the network and an autonomous network selection policy of the terminal are not cooperated or associated, and may be used for the network to formulate/adjust the RFSP index, to facilitate network health check or network optimization. In addition, the method may meet user experience of the terminal, reduce a frequency of autonomous network selection of the terminal, and avoid negative impact of autonomous network selection of the terminal on the network.

It should be noted that the method provided in this embodiment of this application is not only applicable to a 5G network, but may be applicable to all communication standard networks in which a data analytics function is deployed. In addition, the data analytics function is not limited to being provided only by the NWDAF, but may be provided by another module or network element having the data analytics function.

This application further provides the following embodiments.

Embodiment 1: A network selection policy determining method is provided. The method includes the following steps.

A second network device receives a first request from a first network device, where the first request is used to obtain network selection preference information of a first terminal.

The second network device obtains data related to network selection of a terminal.

The second network device learns the data related to network selection of the terminal to obtain first network selection preference information, where the first network selection preference information is network selection preference information of the first terminal, the first network selection preference information is used to determine a network selection policy, and the network selection policy is used to determine a radio management policy for the first terminal.

The second network device sends the first network selection preference information to the first network device.

Embodiment 2: According to the method in Embodiment 1, the first request includes an analytics identifier, and the analytics identifier indicates to analyze a network selection preference.

Embodiment 3: According to the method in Embodiment 2, the first request further includes at least one of the following information: an identifier of the first terminal, location area information corresponding to the analytics identifier, period information corresponding to the analytics identifier, an application identifier corresponding to the analytics identifier, slice information corresponding to the analytics identifier, and data network information corresponding to the analytics identifier.

Embodiment 4: According to the method in any one of Embodiment 1 to Embodiment 3, the data related to network selection of the terminal includes one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information.

Embodiment 5: According to the method in Embodiment 4, the network selection information autonomously determined by the first terminal includes at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

Embodiment 6: According to the method in Embodiment 5, the reason why the first terminal selects the target network includes at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell includes at least one of the following reasons: an access success rate of a second target cell is less than or equal to a fourth threshold, and the first terminal cannot display, on the second target cell, an icon that identifies a first-standard network, where the second target cell is another cell, other than the first target cell, that can be accessed by the first terminal.

Embodiment 7: According to the method in any one of Embodiment 1 to Embodiment 6, the data related to network selection of the terminal includes one or more of the following information: operation behaviors that are of a plurality of terminals and that are related to a network standard, network selection information autonomously determined by the plurality of terminals, a network standard on which the plurality of terminals camp, a user package of the plurality of terminals, complaint information that is of the plurality of terminals and that is related to the network standard, time information corresponding to the foregoing information, location information corresponding to the foregoing information, and service information corresponding to the foregoing information, where the plurality of terminals are related to the first terminal.

Embodiment 8: According to the method in any one of Embodiment 1 to Embodiment 7, the first network selection preference information includes one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

Embodiment 9: According to the method in Embodiment 8,
the at least one network selection consideration factor of the first terminal includes: at least one network selection consideration factor in an autonomous network selection process of the first terminal.

The weight corresponding to each of the at least one network selection consideration factor of the first terminal includes: a weight corresponding to each of the at least one network selection consideration factor in the autonomous network selection process of the first terminal.

Embodiment 10: According to the method in any one of Embodiment 1 to Embodiment 9, the first network device is a policy control network element, and the second network device is a data analytics network element.

Embodiment 11: A network selection policy determining method is provided. The method includes the following steps.

A first terminal sends first network selection preference information to a first network device, where the first network selection preference information is network selection preference information of the first terminal, the first network selection preference information includes a learning result obtained by learning data related to network selection of the first terminal, the network selection preference information of the first terminal is used to determine a network selection policy, and the network selection policy is used to determine a radio management policy for the first terminal.

Embodiment 12: According to the method in Embodiment 11, the method further includes the following steps.

The first terminal receives network selection information from an accessed access network device, where the network selection information is determined based on the radio management policy of the first terminal.

The first terminal performs network selection based on the network selection information.

Embodiment 13: According to the method in Embodiment 11 or Embodiment 12, the data related to network selection of the first terminal includes one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information.

Embodiment 14: According to the method in Embodiment 13, the network selection information autonomously determined by the first terminal includes at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

Embodiment 15: According to the method in Embodiment 14, the reason why the first terminal selects the target network includes at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell includes at least one of the following reasons: an access success rate of a second target cell is less than or equal to a fourth threshold, and the first terminal cannot display, on the second target cell, an icon that identifies a first-standard network, where the second target cell is another cell, other than the first target cell, that can be accessed by the first terminal.

Embodiment 16: According to the method in any one of Embodiment 11 to Embodiment 15, the first network selection preference information includes one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

Embodiment 17: According to the method in Embodiment 16,
the at least one network selection consideration factor of the first terminal includes: at least one network selection consideration factor in an autonomous network selection process of the first terminal.

The weight corresponding to each of the at least one network selection consideration factor of the first terminal includes: a weight corresponding to each of the at least one network selection consideration factor in the autonomous network selection process of the first terminal.

Embodiment 18: According to the method in Embodiment 12, the method further includes the following steps.

The first terminal receives indication information from the first network device, where the indication information indicates the first terminal to perform network selection based on network selection information delivered by a network, or the indication information indicates that network selection information delivered by a network is determined based on the network selection preference information of the first terminal.

That the first terminal performs network selection based on the network selection information includes: The first terminal performs network selection only based on the network selection information under an indication of the indication information.

Embodiment 19: According to the method in any one of Embodiment 11 to Embodiment 18, the first network device is a policy control network element.

Embodiment 20: A network selection policy determining apparatus is provided. The apparatus includes: a functional unit configured to perform the method in any one of Embodiment 1 to Embodiment 19, where an action performed by the functional unit is implemented by hardware or implemented by hardware executing corresponding software.

Embodiment 21: A network selection policy determining apparatus is provided. The apparatus includes a processor coupled to a memory, where the memory is configured to store computer-executable instructions, and the processor executes the computer-executable instructions stored in the memory, to enable the apparatus to implement the method in any one of Embodiment 1 to Embodiment 19.

Embodiment 22: A network selection policy determining method is provided. The method includes the following steps.

A first network device sends a first request to a second network device, where the first request is used to obtain network selection preference information of a first terminal.

The second network device receives the first request from the first network device, and obtains data related to network selection of a terminal.

The second network device learns the data related to network selection of the terminal to obtain first network selection preference information, where the first network selection preference information is the network selection preference information of the first terminal.

The second network device sends the first network selection preference information to the first network device.

The first network device receives the first network selection preference information from the second network device, and determines a network selection policy based on the first network selection preference information, where the network selection policy is used to determine a radio management policy for the first terminal.

Embodiment 23: According to the method in Embodiment 22, the first request includes an analytics identifier, and the analytics identifier indicates to analyze a network selection preference. Embodiment 24: According to the method in Embodiment 23, the first request further includes at least one of the following information: an identifier of the first terminal, location area information corresponding to the analytics identifier, period information corresponding to the analytics identifier, an application identifier corresponding to the analytics identifier, slice information corresponding to the analytics identifier, and data network information corresponding to the analytics identifier.

Embodiment 25: According to the method in any one of Embodiment 22 to Embodiment 24, the data related to network selection of the terminal includes one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information.

Embodiment 26: According to the method in Embodiment 25, the network selection information autonomously determined by the first terminal includes at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

Embodiment 27: According to the method in Embodiment 26, the reason why the first terminal selects the target network includes at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell includes at least one of the following reasons: an access success rate of a second target cell is less than or equal to a fourth threshold, and the first terminal cannot display, on the second target cell, an icon that identifies a first-standard network, where the second target cell is another cell, other than the first target cell, that can be accessed by the first terminal.

Embodiment 28: According to the method in any one of Embodiment 22 to Embodiment 27, the data related to network selection of the terminal includes one or more of the following information: operation behaviors that are of a plurality of terminals and that are related to a network standard, network selection information autonomously determined by the plurality of terminals, a network standard on which the plurality of terminals camp, a user package of the plurality of terminals, complaint information that is of the plurality of terminals and that is related to the network standard, time information corresponding to the foregoing information, location information corresponding to the foregoing information, and service information corresponding to the foregoing information, where the plurality of terminals are related to the first terminal.

Embodiment 29: According to the method in any one of Embodiment 22 to Embodiment 28, the first network selection preference information includes one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

Embodiment 30: According to the method in Embodiment 29,
the at least one network selection consideration factor of the first terminal includes: at least one network selection consideration factor in an autonomous network selection process of the first terminal.

The weight corresponding to each of the at least one network selection consideration factor of the first terminal includes: a weight corresponding to each of the at least one network selection consideration factor in the autonomous network selection process of the first terminal.

Embodiment 31: According to the method in any one of Embodiment 22 to Embodiment 30, that the first network device determines a network selection policy based on the first network selection preference information includes the following step.

The first network device determines the network selection policy based on the first network selection preference information and a service analytics result of the first terminal.

Embodiment 32: According to the method in any one of Embodiment 22 to Embodiment 31, the method further includes the following steps.

The first network device sends the network selection policy to an access network device accessed by the first terminal.

The access network device receives the network selection policy from the first network device, determines the radio management policy for the first terminal based on the network selection policy, and determines network selection information for the first terminal based on the radio management policy of the first terminal.

The access network device sends the network selection information to the first terminal.

The first terminal receives the network selection information from the access network device.

The first terminal performs network selection based on the network selection information.

Embodiment 33: According to the method in Embodiment 32, the method further includes the following steps.

The first network device sends indication information to the first terminal, where the indication information indicates the first terminal to perform network selection based on network selection information delivered by a network, or the indication information indicates that network selection information delivered by a network is determined based on the network selection preference information of the first terminal.

The first terminal receives the indication information from the first network device.

That the first terminal performs network selection based on the network selection information includes: The first terminal performs network selection only based on the network selection information under an indication of the indication information.

Embodiment 34: According to the method in any one of Embodiment 22 to Embodiment 33, the method further includes the following steps.

The first terminal sends data related to network selection of the first terminal to a third network device.

The third network device receives, from the first terminal, the data related to network selection of the first terminal.

That the second network device obtains the data related to network selection of the terminal includes: The second network device obtains, from the third network device, the data related to network selection of the terminal.

Embodiment 35: According to the method in any one of Embodiment 22 to Embodiment 34, the first network device is a policy control network element, and the second network device is a data analytics network element.

The foregoing mainly describes the solutions in embodiments of this application from a perspective of interaction between network elements. It may be understood that, to implement the foregoing functions, the network elements, such as the first network device, the second network device, and the terminal, include corresponding hardware structures and/or software modules for performing each function. A person skilled in the art should be easily aware that units, algorithms, and steps in each example described with reference to embodiments disclosed in this specification can be implemented in this application by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first network device, the second network device, and the terminal may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In an actual implementation, another division manner may be used.

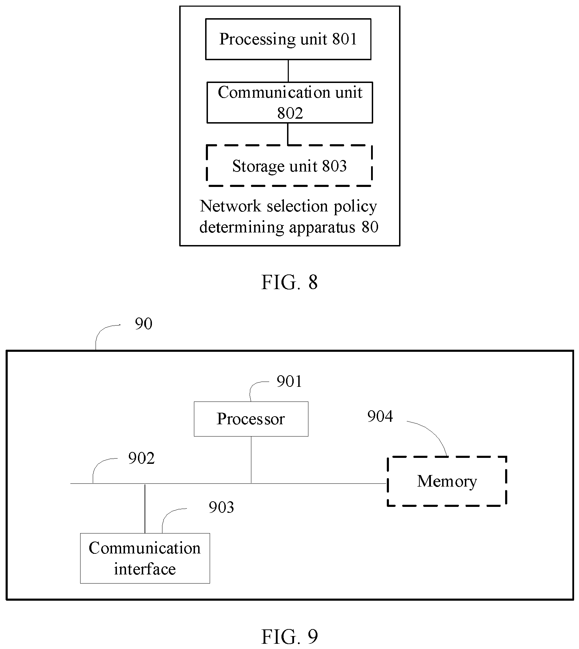

When an integrated unit is used, FIG. 8 shows a network policy determining apparatus 80 in the foregoing embodiments. The network policy determining apparatus 80 may include a processing unit 801 and a communication unit 802. Optionally, the network policy determining apparatus 80 further includes a storage unit 803. A schematic diagram of a structure shown in FIG. 8 may indicate structures of the first network device, the second network device, and the terminal in the foregoing embodiments.

When the schematic diagram of the structure shown in FIG. 8 is used to show the structure of the first network device in the foregoing embodiments, the processing unit 801 is configured to control and manage an action of the first network device. For example, the processing unit 801 is configured to support the first network device to perform steps 501 to 503 in FIG. 5, steps 602 and 606 to 608 in FIG. 6A and FIG. 6B (in this case, the first network device is a PCF in the figure), steps 702 to 705 in FIG. 7 (in this case, the first network device is a PCF in the figure), and/or an action performed by the first network device in another process described in embodiments of this application. The processing unit 801 may communicate with another network entity through the communication unit 802, for example, communicate with an access network device shown in FIG. 5. The storage unit 803 is configured to store program code and data of the first network device.

When the schematic diagram of the structure shown in FIG. 8 indicates the structure of the first network device in the foregoing embodiments, the network policy determining apparatus 80 may be a device, or may be a chip in the device.

When the schematic diagram of the structure shown in FIG. 8 indicates the structure of the second network device in the foregoing embodiments, the processing unit 801 is configured to control and manage an action of the second network device. For example, the processing unit 801 is configured to support the second network device to perform steps 602 to 606 in FIG. 6A and FIG. 6B (in this case, the second network device is an NWDAF), and/or an action performed by the second network device in another process described in embodiments of this application. The processing unit 801 may communicate with another network entity through the communication unit 802, for example, communicate with the PCF shown in FIG. 6A and FIG. 6B. The storage unit 803 is configured to store program code and data of the second network device.

When the schematic diagram of the structure shown in FIG. 8 indicates the structure of the second network device in the foregoing embodiments, the network policy determining apparatus 80 may be a device, or may be a chip in the device.

When the schematic diagram of the structure shown in FIG. 8 indicates the structure of the terminal (for example, a first terminal) in the foregoing embodiments, the processing unit 801 is configured to control and manage an action of the terminal. For example, the processing unit 801 is configured to support the terminal to perform steps 505 and 506 in FIG. 5 (in this case, the terminal is the first terminal in the figure), steps 610 and 611 in FIG. 6A and FIG. 6B (in this case, the terminal is the first terminal in the figure), steps 701, 702, 704, 707, and 708 in FIG. 7 (in this case, the terminal is the first terminal in the figure), and/or an action performed by the terminal in another process described in embodiments of this application. The processing unit 801 may communicate with another network entity through the communication unit 802, for example, communicate with the access network device shown in FIG. 5. The storage unit 803 is configured to store program code and data of the terminal.

When the schematic diagram of the structure shown in FIG. 8 indicates the structure of the terminal in the foregoing embodiments, a network policy determining apparatus 80 may be a device, or may be a chip in the device.

When the integrated unit in FIG. 8 is implemented in a form of a software functional module and sold or used as an independent product, the integrated unit may be stored in one computer-readable storage medium. Based on such an understanding, the technical solutions of embodiments of this application essentially, or the part contributing to the conventional technology, or all or some of the technical solutions may be implemented in a form of a software product. A computer software product is stored in a storage medium and includes several instructions for instructing a computer device (which may be a personal computer, a server, or a network device) or a processor (processor) to perform all or some of the steps of the methods described in embodiments of this application. The storage medium that stores the computer software product includes any medium that may store program code, such as a USB flash drive, a removable hard disk, a read-only memory (read-only memory, ROM), a random access memory (random access memory, RAM), a magnetic disk, or an optical disc.

The units in FIG. 8 may alternatively be referred to as modules. For example, the processing unit may be referred to as a processing module.

FIG. 9 is a schematic diagram of a hardware structure of a network policy determining apparatus 90 according to an embodiment of this application. The network policy determining apparatus 90 includes one or more processors 901 and a communication interface 903.

Optionally, the network policy determining apparatus 90 further includes a memory 904. The memory 904 may include a read-only memory and a random access memory, and provide operation instructions and data to the processor 901. A part of the memory 904 may further include a non-volatile random access memory (non-volatile random access memory, NVRAM).

In this embodiment of this application, the network policy determining apparatus 90 performs a corresponding operation by invoking operation instructions (the operation instructions may be stored in an operating system) stored in the memory 904.

The processor 901 may also be referred to as a central processing unit (central processing unit, CPU).

The processor 901, the communication interface 903, and the memory 904 are coupled together by using a bus system 902. The bus system 902 may further include a power bus, a control bus, a status signal bus, and the like in addition to a data bus. However, for clear description, the buses are marked as the bus system 902 in FIG. 9.

The method disclosed in embodiments of this application may be applied to the processor 901, or may be implemented by the processor 901. The processor 901 may be an integrated circuit chip and has a signal processing capability. In an implementation process, steps of the foregoing method may be implemented by using an integrated logic circuit of hardware in the processor 901 or instructions in a form of software. The processor 901 may be a general purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor 901 may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art such as a random access memory, a flash memory, a read-only memory, a programmable read-only memory, an electrically erasable programmable memory, or a register. The storage medium is located in the memory 904. The processor 901 reads information in the memory 904 and completes the steps of the foregoing methods in combination with hardware of the processor 901. For example, the schematic diagram of the structure shown in FIG. 9 may indicate structures of the first network device, the second network device, and the terminal in the foregoing embodiments.

When the schematic diagram of the structure shown in FIG. 9 indicates the structure of the first network device in the foregoing embodiments, the processor 901 is configured to control and manage an action of the first network device. For example, the processor 901 is configured to support the first network device to perform steps 501 to 503 in FIG. 5, steps 602 and 606 to 608 in FIG. 6A and FIG. 6B (in this case, the first network device is a PCF in the figure), steps 702 to 705 in FIG. 7 (in this case, the first network device is a PCF in the figure), and/or an action performed by the first network device in another process described in embodiments of this application. The processor 901 may communicate with another network entity through the communication interface 903, for example, communicate with an access network device shown in FIG. 5. The memory 904 is configured to store program code and data of the first network device. When the schematic diagram of the structure shown in FIG. 9 indicates the structure of the second network device in the foregoing embodiments, the processor 901 is configured to control and manage an action of the second network device. For example, the processor 901 is configured to support the second network device to perform steps 602 to 606 in FIG. 6A and FIG. 6B (in this case, the second network device is an NWDAF), and/or an action performed by the second network device in another process described in embodiments of this application. The processor 901 may communicate with another network entity through the communication interface 903, for example, communicate with the PCF shown in FIG. 6A and FIG. 6B. The memory 904 is configured to store program code and data of the second network device.

When the schematic diagram of the structure shown in FIG. 9 indicates the structure of the terminal (for example, a first terminal) in the foregoing embodiment, the processor 901 is configured to control and manage an action of the terminal. For example, the processor 901 is configured to support the terminal to perform steps 505 and 506 in FIG. 5 (in this case, the terminal is the first terminal in the figure), steps 610 and 611 in FIG. 6A and FIG. 6B (in this case, the terminal is the first terminal in the figure), steps 701, 702, 704, 707, and 708 in FIG. 7 (in this case, the terminal is the first terminal in the figure), and/or an action performed by the terminal in another process described in embodiments of this application. The processor 901 may communicate with another network entity through the communication interface 903, for example, communicate with the access network device shown in FIG. 5. The memory 904 is configured to store program code and data of the terminal.

The foregoing communication unit or communication interface may be an interface circuit or a communication interface of the apparatus, and is configured to receive a signal from another apparatus. For example, when the apparatus is implemented as a chip, the communication unit or communication interface is an interface circuit or a communication interface that is used by the chip to receive a signal from or send a signal to another chip or apparatus.

In the foregoing embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored in a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Optionally, an embodiment of this application further provides a computer-readable storage medium. The computer-readable storage medium stores computer instructions. When the computer-readable storage medium is run on a computer, the computer is enabled to perform any method provided in embodiments of this application.

An embodiment of this application further provides a computer program product including computer instructions. When the computer program product is run on a computer, the computer is enabled to perform any method provided in embodiments of this application.

An embodiment of this application further provides a chip. The chip includes a processor. When the processor executes instructions, the chip is enabled to perform any method provided in embodiments of this application.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, an SSD), or the like.

Although this application is described herein with reference to embodiments, in a process of implementing this application that seeks protection, a person skilled in the art may understand and implement other variations of the disclosed embodiments by viewing the accompanying drawings, disclosed content, and appended claims. In the claims, the word "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to them without departing from the spirit and scope of this application. Correspondingly, this specification and accompanying drawings are merely example descriptions of this application defined by the accompanying claims, and are considered as any of or all modifications, variations, combinations, or equivalents that cover the scope of this application. It is clear that a person skilled in the art may make various modifications and variations to this application without departing from the spirit and scope of this application. In this way, this application is intended to cover these modifications and variations of this application provided that they fall within the scope of protection defined by the claims of this application and their equivalent technologies.

## Claims

1. A network selection policy determining method, comprising:
sending, by a first terminal, data related to network selection of the first terminal to a third network device, wherein the data related to network selection of the first terminal is used to determine first network selection preference information, the first network selection preference information is network selection preference information of the first terminal, and the first network selection preference information is used to determine a network selection policy.

2. The method according to claim 1, wherein the network selection policy is used to determine a radio management policy for the first terminal.

3. The method according to claim 1 or 2, wherein the data related to network selection of the first terminal comprises one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information.

4. The method according to claim 3, wherein the network selection information autonomously determined by the first terminal comprises at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

5. The method according to claim 4, wherein the reason why the first terminal selects the target network comprises at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell comprises at least one of the following reasons: an access success rate of a second target cell is less than or equal to a fourth threshold, and the first terminal cannot display, on the second target cell, an icon that identifies a first-standard network, wherein the second target cell is another cell, other than the first target cell, that can be accessed by the first terminal.

6. The method according to any one of claims 1 to 5, wherein the first network selection preference information comprises one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

7. The method according to claim 6, wherein
the at least one network selection consideration factor of the first terminal comprises: at least one network selection consideration factor in an autonomous network selection process of the first terminal; and
the weight corresponding to each of the at least one network selection consideration factor of the first terminal comprises: a weight corresponding to each of the at least one network selection consideration factor in the autonomous network selection process of the first terminal.

8. A network selection policy determining method, comprising:
obtaining, by a first network device, first network selection preference information, wherein the first network selection preference information is network selection preference information of a first terminal, and the first network selection preference information comprises a learning result obtained by learning data related to network selection of a terminal; and
determining, by the first network device, a network selection policy based on the first network selection preference information.

9. The method according to claim 8, wherein the network selection policy is used to determine a radio management policy for the first terminal.

10. The method according to claim 8 or 9, wherein the method further comprises:
sending, by the first network device, a first request to a second network device, wherein the first request is used to obtain the network selection preference information of the first terminal; and
the obtaining, by a first network device, first network selection preference information comprises: receiving, by the first network device, the first network selection preference information from the second network device.

11. The method according to claim 10, wherein the first request comprises an analytics identifier, and the analytics identifier indicates to analyze a network selection preference.

12. The method according to claim 11, wherein the first request further comprises at least one of the following information: an identifier of the first terminal, location area information corresponding to the analytics identifier, period information corresponding to the analytics identifier, an application identifier corresponding to the analytics identifier, slice information corresponding to the analytics identifier, and data network information corresponding to the analytics identifier.

13. The method according to any one of claims 8 to 12, wherein the obtaining, by a first network device, first network selection preference information comprises:
receiving, by the first network device, the first network selection preference information from the first terminal.

14. The method according to any one of claims 8 to 13, wherein the data related to network selection of the terminal comprises one or more of the following information: an operation behavior that is of the first terminal and that is related to a network standard, network selection information autonomously determined by the first terminal, a network standard on which the first terminal camps, a user package of the first terminal, complaint information that is of the first terminal and that is related to the network standard, time information corresponding to the foregoing information, location information corresponding to the foregoing information, and service information corresponding to the foregoing information.

15. The method according to claim 14, wherein the network selection information autonomously determined by the first terminal comprises at least one of the following information: information about a target network autonomously determined by the first terminal, a reason why the first terminal selects the target network, a priority that is of a frequency and that is autonomously determined by the first terminal, information about a first target cell autonomously determined by the first terminal, and a reason why the first terminal selects the first target cell.

16. The method according to claim 15, wherein the reason why the first terminal selects the target network comprises at least one of the following reasons: an access success rate of a source network is less than or equal to a first threshold, power consumption of the first terminal during access to the source network is greater than or equal to a second threshold, and a quality of service value during access to the source network is less than or equal to a third threshold; and/or the reason why the first terminal selects the first target cell comprises at least one of the following reasons: an access success rate of a second target cell is less than or equal to a fourth threshold, and the first terminal cannot display, on the second target cell, an icon that identifies a first-standard network, wherein the second target cell is another cell, other than the first target cell, that can be accessed by the first terminal.

17. The method according to any one of claims 8 to 16, wherein the data related to network selection of the terminal comprises one or more of the following information: operation behaviors that are of a plurality of terminals and that are related to a network standard, network selection information autonomously determined by the plurality of terminals, a network standard on which the plurality of terminals camp, a user package of the plurality of terminals, complaint information that is of the plurality of terminals and that is related to the network standard, time information corresponding to the foregoing information, location information corresponding to the foregoing information, and service information corresponding to the foregoing information, wherein the plurality of terminals are related to the first terminal.

18. The method according to any one of claims 8 to 17, wherein the first network selection preference information comprises one or more of the following information: a network standard preferred by the first terminal, at least one network selection consideration factor of the first terminal, a weight corresponding to each of the at least one network selection consideration factor of the first terminal, time information corresponding to the foregoing information, location information corresponding to the foregoing information, and service information corresponding to the foregoing information.

19. The method according to claim 18, wherein
the at least one network selection consideration factor of the first terminal comprises: at least one network selection consideration factor in an autonomous network selection process of the first terminal; and
the weight corresponding to each of the at least one network selection consideration factor of the first terminal comprises: a weight corresponding to each of the at least one network selection consideration factor in the autonomous network selection process of the first terminal.

20. The method according to any one of claims 8 to 19, wherein the method further comprises:
sending, by the first network device, the network selection policy to an access network device accessed by the first terminal.

21. The method according to any one of claims 8 to 20, wherein the determining, by the first network device, a network selection policy based on the first network selection preference information comprises:
determining, by the first network device, the network selection policy based on the first network selection preference information and a service analytics result of the first terminal.

22. The method according to any one of claims 8 to 21, wherein the method further comprises:
sending, by the first network device, indication information to the first terminal, wherein the indication information indicates the first terminal to perform network selection based on network selection information delivered by a network, or the indication information indicates that network selection information delivered by a network is determined based on the network selection preference information of the first terminal.

23. The method according to any one of claims 8 to 22, wherein the first network device is a policy control network element, and the second network device is a data analytics network element.

24. A network selection policy determining apparatus, comprising: a functional unit configured to perform the method according to any one of claims 1 to 7, or a functional unit configured to perform the method according to any one of claims 8 to 23, wherein an action performed by the functional unit is implemented by hardware or implemented by hardware executing corresponding software.

25. A network selection policy determining apparatus, comprising a processor coupled to a memory, wherein
the memory is configured to store computer-executable instructions, and the processor executes the computer-executable instructions stored in the memory, to enable the apparatus to implement the method according to any one of claims 1 to 7 or to implement the method according to any one of claims 8 to 23.
